(19) Europäisches Patentamt / European Patent Office / Office européen des brevets

(11) **EP 4 417 410 A1**

(12) **EUROPEAN PATENT APPLICATION**
published in accordance with Art. 153(4) EPC

(43) Date of publication:
**21.08.2024 Bulletin 2024/34**

(21) Application number: **22880746.7**

(22) Date of filing: **22.09.2022**

(51) International Patent Classification (IPC):
*B32B 5/18* (2006.01)   *B32B 27/00* (2006.01)
*B01D 53/04* (2006.01)   *C01B 32/50* (2017.01)
*B01J 20/26* (2006.01)   *B01J 20/28* (2006.01)
*B01J 20/30* (2006.01)

(52) Cooperative Patent Classification (CPC):
**B01D 53/04; B01J 20/26; B01J 20/28; B01J 20/30; B32B 5/18; B32B 27/00; C01B 32/50;** Y02C 20/40

(86) International application number:
**PCT/JP2022/035486**

(87) International publication number:
**WO 2023/063050 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2021 JP 2021169443**
**16.09.2022 JP 2022148614**

(71) Applicant: **Nitto Denko Corporation**
**Osaka 567-8680 (JP)**

(72) Inventor: **MATSUDA, Koso**
**Osaka 5678680 (JP)**

(74) Representative: **Hoffmann Eitle**
**Patent- und Rechtsanwälte PartmbB**
**Arabellastraße 30**
**81925 München (DE)**

(54) **ACIDIC GAS ADSORBENT, STRUCTURE PROVIDED WITH ACIDIC GAS ADSORBENT, ACIDIC GAS ADSORPTION DEVICE, ACIDIC GAS RECOVERY DEVICE, METHOD FOR PRODUCING ACIDIC GAS ADSORBENT, AND SHEET-LIKE STRUCTURE**

(57) The present invention provides a new acidic gas adsorbent suitable for adsorption of acidic gas. An acidic gas adsorbent 10 of the present invention includes a porous sheet 1 including a polymer P. The polymer P has an amino group. The porous sheet 1 has a three-dimensional network skeleton composed of the polymer P. A structure 15 of the present invention includes the acidic gas adsorbent 10 and an air flow path 14. An acidic gas adsorption device 200 of the present invention includes an adsorption part 221 having a gas inlet 222 and a gas outlet 223. The adsorption part 221 contains the acidic gas adsorbent 10.

10

1
2

FIG.1

EP 4 417 410 A1

**Description**

TECHNICAL FIELD

The present invention relates to an acidic gas adsorbent, a structure including the acidic gas adsorbent, an acidic gas adsorption device, an acidic gas recovery device, a method for producing the acidic gas adsorbent, and a sheet-shaped structure.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

For example, Patent Literature 1 discloses an adsorbent in which a substrate is coated with an amine compound. Specifically, in Patent Literature 1, porous particles of alumina are supported on the substrate, and the pores of the porous particles are filled with the amine compound.

CITATION LIST

Patent Literature

Patent Literature 1: JP 2014-533195 A

SUMMARY OF INVENTION

Technical Problem

A new acidic gas adsorbent suitable for adsorption of acidic gas is required.

Solution to Problem

The present invention provides an acidic gas adsorbent including a porous sheet including a polymer, wherein

the polymer has an amino group, and
the porous sheet has a three-dimensional network skeleton composed of the polymer.

Further, the present invention provides a structure including:

the above acidic gas adsorbent; and
an air flow path.

Further, the present invention provides an acidic gas adsorption device including

an adsorption part having a gas inlet and a gas outlet, wherein
the adsorption part contains the above acidic gas adsorbent.

Further, the present invention provides an acidic gas recovery device including:

the above acidic gas adsorbent; and
a medium path, wherein
a heat medium which heats the acidic gas adsorbent passes through the medium path during desorption operation
in which acidic gas adsorbed by the acidic gas adsorbent is desorbed from the acidic gas adsorbent.

Further, the present invention provides a production method for an acidic gas adsorbent including a porous sheet, the production method including:

a step (I) of curing a mixed solution including a porogen and a compound group including an amine monomer, to obtain a cured body; and
a step (II) of removing the porogen from the cured body having a sheet shape, to obtain the porous sheet.

Further, the present invention provides a sheet-shaped structure including:

a porous sheet including a polymer; and
a support supporting the porous sheet, wherein
the polymer has an amino group, and
the porous sheet has a three-dimensional network skeleton composed of the polymer.

Advantageous Effects of Invention

According to the present invention, a new acidic gas adsorbent suitable for adsorption of acidic gas can be provided.

BRIEF DESCRIPTION OF THE DRAWINGS

FIG. 1 is a cross-sectional view schematically showing an acidic gas adsorbent according to one embodiment of the present invention.
FIG. 2A is a diagram for describing a method for producing the acidic gas adsorbent.
FIG. 2B is a diagram for describing the method for producing the acidic gas adsorbent.
FIG. 3 is a diagram for describing a method for measuring an adsorption amount of carbon dioxide by the acidic gas adsorbent.
FIG. 4 is a cross-sectional view schematically showing a modification of the acidic gas adsorbent.
FIG. 5A is a perspective view schematically showing an example of a structure including acidic gas adsorbents.
FIG. 5B is a perspective view schematically showing a modification of the structure including the acidic gas adsorbents.
FIG. 5C is a perspective view schematically showing another modification of the structure including the acidic gas adsorbents.
FIG. 6A is a perspective view schematically showing an example of an acidic gas recovery device.
FIG. 6B is a cross-sectional view showing a schematic configuration of a modification of the acidic gas recovery device.
FIG. 7 is a scanning electron microscope (SEM) image of a cross-section of a porous sheet produced in Example 1.
FIG. 8 is a graph showing the results of measuring an adsorption amount of carbon dioxide with respect to acidic gas adsorbents of Example 1 and Comparative Examples 1 to 3.
FIG. 9 is a graph showing the results of measuring an adsorption amount of carbon dioxide with respect to acidic gas adsorbents of Example 2 and Comparative Examples 4 to 6.

DESCRIPTION OF EMBODIMENTS

An acidic gas adsorbent according to a first aspect of the present invention includes a porous sheet including a polymer, wherein

the polymer has an amino group, and
the porous sheet has a three-dimensional network skeleton composed of the polymer.

In a second aspect of the present invention, for example, in the acidic gas adsorbent according to the first aspect, the porous sheet includes continuous holes continuously formed in a three-dimensional manner.
In a third aspect of the present invention, for example, in the acidic gas adsorbent according to the first or second aspect, the porous sheet includes the polymer as a main com ponent.
In a fourth aspect of the present invention, for example, in the acidic gas adsorbent according to any one of the first to third aspects, the amino group includes a secondary amino group.
In a fifth aspect of the present invention, for example, in the acidic gas adsorbent according to any one of the first to fourth aspects, the polymer is an epoxy polymer including a constitutional unit derived from an amine monomer.
In a sixth aspect of the present invention, for example, in the acidic gas adsorbent according to any one of the first to fifth aspects, the polymer has a glass transition temperature of 40°C or less.

In a seventh aspect of the present invention, for example, in the acidic gas adsorbent according to any one of the first to sixth aspects, the porous sheet has a specific surface area of 1.0 $m^2/g$ or more.

In an eighth aspect of the present invention, for example, in the acidic gas adsorbent according to any one of the first to seventh aspects, the porous sheet has a porosity of 20% or more.

In a ninth aspect of the present invention, for example, the acidic gas adsorbent according to any one of the first to eighth aspects further includes a support supporting the porous sheet.

In a tenth aspect of the present invention, for example, with respect to the acidic gas adsorbent according to any one of the first to ninth aspects, an adsorption amount of carbon dioxide when the acidic gas adsorbent is caused to be in contact with mixed gas composed of carbon dioxide, nitrogen, and water vapor for 15 hours is 0.1 $mmol/cm^3$ or more,

where the carbon dioxide in the mixed gas has a concentration of 400 vol ppm and the mixed gas has a temperature of 20°C and a humidity of 50%RH.

In an eleventh aspect of the present invention, for example, the acidic gas adsorbent according to any one of the first to tenth aspects has a flat plate shape or a corrugated shape.

A structure according to a twelfth aspect of the present invention includes:

the acidic gas adsorbent according to any one of the first to eleventh aspects; and
an air flow path.

An acidic gas adsorption device according to a thirteenth aspect of the present invention includes

an adsorption part having a gas inlet and a gas outlet, wherein
the adsorption part contains the acidic gas adsorbent according to any one of the first to eleventh aspects.

An acidic gas recovery device according to a fourteenth aspect of the present invention includes:

the acidic gas adsorbent according to any one of the first to eleventh aspects; and
a medium path, wherein
a heat medium which heats the acidic gas adsorbent passes through the medium path during desorption operation in which acidic gas adsorbed by the acidic gas adsorbent is desorbed from the acidic gas adsorbent.

In a fifteenth aspect of the present invention, for example, in the acidic gas recovery device according to the fourteenth aspect, the medium path penetrates the acidic gas adsorbent in a thickness direction of the acidic gas adsorbent.

In a sixteenth aspect of the present invention, for example, the acidic gas recovery device according to the fourteenth aspect includes the two acidic gas adsorbents, and the medium path is formed between the two acidic gas adsorbents.

In a seventeenth aspect of the present invention, for example, in the acidic gas recovery device according to any one of the fourteenth to sixteenth aspects, a cooling medium which cools the acidic gas adsorbent passes through the medium path after the desorption operation.

A production method for an acidic gas adsorbent according to an eighteenth aspect of the present invention is a production method for an acidic gas adsorbent including a porous sheet, and includes:

a step (I) of curing a mixed solution including a porogen and a compound group including an amine monomer, to obtain a cured body; and
a step (II) of removing the porogen from the cured body having a sheet shape, to obtain the porous sheet.

In a nineteenth aspect of the present invention, for example, in the step (I) in the production method according to the eighteenth aspect, the mixed solution is applied onto a support and an obtained coating film is cured to obtain the cured body having a sheet shape.

A sheet-shaped structure according to a twentieth aspect of the present invention includes:

a porous sheet including a polymer; and
a support supporting the porous sheet, wherein
the polymer has an amino group, and
the porous sheet has a three-dimensional network skeleton composed of the polymer.

An acidic gas adsorbent according to a twenty-first aspect of the present invention includes a porous resin sheet including a polymer, wherein
the polymer has an amino group.

A sheet-shaped structure according to a twenty-second aspect of the present invention includes:

a porous resin sheet including a polymer; and
a support supporting the porous resin sheet, wherein
the polymer has an amino group.

Hereinafter, details of the present invention will be described, but the following description is not intended to limit the present invention to specific embodiments.

<Embodiment of acidic gas adsorbent>

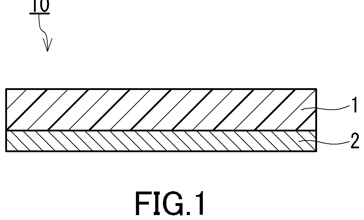

As shown in FIG. 1, an acidic gas adsorbent 10 of the present embodiment includes a porous sheet 1 including a polymer P, and for example, further includes a support 2. The porous sheet 1 is a porous resin sheet including the polymer P. The polymer P has an amino group, and has a function of adsorbing acidic gas due to the amino group.

The porous sheet 1 has a three-dimensional network skeleton composed of the polymer P. Specifically, the porous sheet 1 has a porous structure, and the porous structure includes pores derived from the three-dimensional network skeleton. The pores derived from the three-dimensional network skeleton have a size that allows the pores to be observed, for example, when observed using a scanning electron microscope (SEM) at a magnification of 5000 times. The diameter (average pore diameter) of these pores is preferably 0.1 $\mu$m or more and 5 $\mu$m or less, and more preferably 3 $\mu$m or less. When the pore diameter is 0.1 $\mu$m or more, there is a tendency that gas diffusibility in the porous sheet 1 can be sufficiently ensured. When the pore diameter is 5 $\mu$m or less, even with a medium porosity, the three-dimensional network skeleton in the porous sheet 1 does not become excessively thick, and a decrease in the diffusion speed of acidic gas into the polymer P is easily suppressed.

The present invention provides, in another aspect thereof, an acidic gas adsorbent 10 including a porous sheet 1 having a porous structure including pores derived from a three-dimensional network skeleton, wherein
the three-dimensional network skeleton includes a polymer P having an amino group.

The support 2 supports the porous sheet 1 and is in direct contact with the porous sheet 1. The acidic gas adsorbent 10 including the support 2 is suitable for use as a component of an acidic gas recovery device described later. The acidic gas adsorbent 10 may further include or may not necessarily include a fixing means for fixing the porous sheet 1 and the support 2. A specific example of the fixing means is an adhesive, specifically, an adhesive sheet including an adhesive, or the like. In the present description, the term "adhesive" is used as a term that encompasses pressure-sensitive adhesives.

The acidic gas adsorbent 10 may not necessarily include the support 2, and may be composed of only the porous sheet 1. That is, the acidic gas adsorbent 10 may be a self-supporting film (single-layer film) of the porous sheet 1.

The acidic gas adsorbent 10 is typically a sheet-shaped structure. The acidic gas adsorbent 10 as a sheet-shaped structure has, for example, a flat plate shape or a corrugated shape.

The present invention provides, in another aspect thereof, a sheet-shaped structure including:

a porous sheet 1 including a polymer P; and
a support 2 supporting the porous sheet 1, wherein
the polymer P has an amino group, and
the porous sheet 1 has a three-dimensional network skeleton composed of the polymer P.

Furthermore, the present invention provides, in another aspect thereof, a sheet-shaped structure including:

a porous sheet 1 having a porous structure including pores derived from a three-dimensional network skeleton; and
a support 2 supporting the porous sheet 1, wherein
the above three-dimensional network skeleton includes a polymer P having an amino group.

(Porous sheet)

In the porous sheet 1, the polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. In other words, the amino group of the polymer P preferably includes a secondary amino group. The polymer P having a secondary amino group also has a tendency of easily desorbing the adsorbed acidic gas. That is, in the case of the polymer P having a secondary amino group, a regeneration process of the acidic gas adsorbent 10 can be performed under a relatively mild condition. The polymer P may include a tertiary amino group, but does not have to include any tertiary amino group.

The weight ratio of nitrogen element in the polymer P is, for example, 5 wt% or more and preferably 10 wt% or more. The higher this weight ratio is, the more the acidic gas adsorption ability of the acidic gas adsorbent 10 tends to be improved. The upper limit value of the weight ratio of nitrogen element in the polymer P is not limited in particular, and is 30 wt%, for example. When all nitrogen element included in the polymer P is derived from the amino group, the above weight ratio of nitrogen element can be regarded as the weight ratio of the amino group in the polymer P.

The density of the amino group in the polymer P is, for example, 1 mmol/g or more, preferably 5 mmol/g or more, and more preferably 10 mmol/g or more. The upper limit value of the density of the amino group is not limited in particular, and is 30 mmol/g, for example. In the present description, the density of the amino group in the polymer P means the amount of substance of the amino group included in 1 g of the polymer P.

The polymer P may include another functional group other than the amino group. Examples of the other functional group include a hydroxyl group, an ether group, an ester group, an amide group, and the like.

The polymer P is, for example, an epoxy polymer including a constitutional unit U1 derived from an amine monomer. The epoxy polymer is, for example, at least one selected from the group consisting of a polymer P1 of a monomer group including an amine monomer and an epoxy monomer and a reaction product P2 of a compound group including an amine monomer and an epoxy prepolymer, and is preferably the polymer P1. A specific example of the reaction product P2 is a product (crosslinked product) in which an epoxy prepolymer is crosslinked by an amine monomer.

The monomer group for forming the polymer P1 includes an amine monomer and an epoxy monomer as described above, and is preferably composed of only these monomers. That is, the polymer P1 is preferably a polymer of an amine monomer and an epoxy monomer.

The amine monomer is a monomer including at least one amino group, and, for example, includes at least one primary amino group. The number of the primary amino groups included in the amine monomer is preferably two or more, and may be three or more, or may be four or more. The upper limit value of the number of the primary amino groups is not limited in particular, and is, for example, 30, or may be 10. The amine monomer may include a secondary amino group and a tertiary amino group, in addition to the primary amino group, but does not have to include any tertiary amino group. The molecular weight of the amine monomer is not limited in particular and is, for example, less than 5000 and preferably 3000 or less, and may be 1000 or less or may be 500 or less.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, polyetherdiamine, and polyethyleneimine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; and the like. Depending on the case, the amine monomer may be an aliphatic polyamideamine including a polyamine and a dimer acid. The amine monomer is preferably an aliphatic amine, in particular, triethylenetetramine (TETA). The amine monomer can be used alone, or two types or more thereof may be used in combination.

The epoxy monomer is a monomer including at least one epoxy group. The number of the epoxy groups included in the epoxy monomer is preferably two or more, and may be three or more, or may be four or more. The upper limit value of the number of the epoxy groups included in the epoxy monomer is not limited in particular, and is ten, for example. The molecular weight of the epoxy monomer is not limited in particular, and is, for example, less than 1000 and preferably 500 or less.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, and pentaerythritol polyglycidyl ether; and amino group-containing polyfunctional epoxy compounds such as N,N,N',N'-tetraglycidyl-m-xylenediamine and 1,3-bis(N,N-diglycidylaminomethyl)cyclohexane. The epoxy monomer is preferably an ether group-containing polyfunctional epoxy compound such as ethylene glycol diglycidyl ether (EDE) and pentaerythritol tetraglycidyl ether (PETG). The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the monomer group for forming the polymer P1.

Examples of the amine monomer for forming the reaction product P2 include those described above with respect to the polymer P1.

The epoxy prepolymer includes at least one epoxy group, for example. The number of the epoxy groups included in the epoxy prepolymer is preferably two or more, and may be three or more, or may be four or more. The upper limit value of the number of the epoxy groups included in the epoxy prepolymer is not limited in particular, and is 100, for example. The weight average molecular weight of the epoxy prepolymer is not limited in particular, and is 1000 to 50000, for example.

Examples of the epoxy prepolymer include an aromatic epoxy resin and a non-aromatic epoxy resin. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like. The epoxy prepolymer can be used alone, or two types or more thereof can be used in combination.

As described above, the polymer P as an epoxy polymer includes the constitutional unit U1 derived from an amine monomer. When the polymer P is the polymer P1, the polymer P further includes a constitutional unit U2 derived from an epoxy monomer. The content of the constitutional unit U1 in the polymer P, in particular, the polymer P1, is, for example, 30 wt% or more and preferably 50 wt% or more. The upper limit value of the content of the constitutional unit U1 is not limited in particular, and is 80 wt%, for example. The content of the constitutional unit U2 in the polymer P, in particular, the polymer P1, is 20 wt% to 70 wt%, for example.

When the polymer P is to be prepared, the blending ratio between the amine monomer and the epoxy monomer or the epoxy prepolymer is preferably set such that the ratio of the equivalent of the epoxy group included in the epoxy monomer or the epoxy prepolymer relative to the equivalent of active hydrogen of the primary amino group included in the amine monomer is, for example, 1 or less, preferably 0.9 or less, and more preferably 0.5 or less.

A glass transition temperature Tg of the polymer P is not limited in particular, is, for example, 40°C or less, preferably 30°C or less, more preferably 20°C or less, and further preferably 15°C or less. When the glass transition temperature Tg of the polymer P is low to this extent, a regeneration process of the acidic gas adsorbent 10 can be performed under a relatively mild condition, for example, with heat treatment at a low temperature. From the viewpoint of sufficiently ensuring the acidic gas adsorption ability of the acidic gas adsorbent 10 and from the viewpoint of heat resistance, the lower limit value of the glass transition temperature Tg of the polymer P is, for example, -100°C, preferably -50°C, and more preferably -10°C. In the present description, the glass transition temperature Tg means the midpoint glass transition temperature ($T_{mg}$) obtained according to the standards of JIS K7121:1987. Normally, the polymer P corresponds to a thermosetting resin. The polymer P is solid, for example, at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The porous sheet 1 includes, for example, the polymer P as a main component. In the present description, the "main component" means a component most included on a weight basis in the porous sheet 1. The content of the polymer P in the porous sheet 1 is, for example, 50 wt% or more, preferably 70 wt% or more, and more preferably 90 wt% or more, and may be 95 wt% or more, or may be 99 wt% or more. The porous sheet 1 may be substantially composed of only the polymer P. The higher the content of the polymer P is, the more the acidic gas adsorption ability of the acidic gas adsorbent 10 tends to be improved.

The porous sheet 1 may be substantially composed of only the polymer P, and may further include another material other than the polymer P. Examples of the other material include a reaction accelerator, a plasticizer, a filler, a pigment, a dye, an anti-aging agent, a conductive material, an antistatic agent, an ultraviolet absorber, a flame retardant, an antioxidant, and the like. The porous sheet 1 preferably does not include, for example, porous particles of alumina or the like, and a binding agent for binding the porous particles, as the other material.

The reaction accelerator is utilized, for example, when the polymer P is synthesized. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the polymer P1, for example.

Examples of the filler include a fiber, a fiber structure including a fiber, and the like. Examples of the fiber include: glass fibers; natural fibers such as wood pulp, cotton, and hemp (e.g., Manila hemp); and chemical fibers (synthetic fibers) such as polyester fiber, rayon, vinylon, acetate fiber, polyvinyl alcohol (PVA) fiber, polyamide fiber, polyolefin fiber, and polyurethane fiber. Examples of the fiber structure include a woven fabric, a nonwoven fabric, paper, and the like. A specific example of the fiber structure is glass paper. When the porous sheet 1 includes a fiber structure as a filler, there is a tendency that a dimensional change of the porous sheet 1 can be suppressed during use of the acidic gas adsorbent 10 or the like.

When the porous sheet 1 includes a fiber structure as a filler, the three-dimensional network skeleton including the polymer P and the fiber structure may exist independently of each other in the porous sheet 1. In this case, the porous structure of the porous sheet 1 further has, for example, pores derived from the fiber structure together with the pores derived from the three-dimensional network skeleton including the polymer P. In this case, in the porous sheet 1, the three-dimensional network skeleton including the polymer P and the fiber structure can be regarded as being combined.

The fiber structure as a filler preferably has a high tensile strength from the viewpoint of suppressing a dimensional change of the porous sheet 1. As an example, the fiber structure preferably has a tensile strength $S_{TD}$ of 1 MPa or more as measured by the following Test 1.

Test 1: The fiber structure is cut out into a test piece with a width of 10 mm and a length of 100 mm. At this time, the longitudinal direction of the test piece is caused to coincide with the TD direction (transverse direction) of the fiber structure. The test piece is set in a tensile tester, and a tension test is performed under conditions of a distance of 20 mm between chucks and a tensile speed of 100 mm/min. The tensile strength $S_{TD}$ when the test piece is elongated by 3% is identified.

In the above tension test, a test force applied to the test piece (test force when the test piece is elongated by 3%, unit: N/10 mm) is measured when the distance between chucks increases by 0.6 mm after the test starts. On the basis of the obtained test force value (N/10 mm) and the thickness ($\mu$m) of the fiber structure, the tensile strength $S_{TD}$ can be calculated by the following formula. The tension test is performed in an atmosphere of 25°C.

$$\text{Tensile strength } S_{TD} \text{ (MPa)} = \text{test force (N/10 mm)}/(\text{thickness (}\mu\text{m)}/100)$$

The tensile strength $S_{TD}$ of the fiber structure is more preferably 2 MPa or more, and may be 3 MPa or more, 4 MPa or more, 5 MPa or more, 6 MPa or more, 7 MPa or more, or even 8 MPa or more. The upper limit value of the tensile strength $S_{TD}$ is not limited in particular, and is 30 MPa, for example.

Furthermore, the fiber structure preferably also has a tensile strength $S_{MD}$ of 1 MPa or more as measured by the same method as in Test 1 above, except that the longitudinal direction of the test piece is caused to coincide with the MD direction (machine direction) of the fiber structure. The tensile strength $S_{MD}$ is more preferably 2 MPa or more, and may be 5 MPa or more, 8 MPa or more, 10 MPa or more, 11 MPa or more, or even 12 MPa or more. The upper limit value of the tensile strength $S_{MD}$ is not limited in particular, and is 30 MPa, for example.

A density d of nitrogen element in the porous sheet 1 is not limited in particular, and is, for example, 1 mmol/g or more, preferably 5 mmol/g or more, and more preferably 10 mmol/g or more. The upper limit value of the density d of nitrogen element is not limited in particular, and is 30 mmol/g, for example. When all nitrogen element included in the porous sheet 1 is derived from the amino group, the density d of nitrogen element can be regarded as the density of the amino group in the porous sheet 1.

The density d of nitrogen element can be measured according to the following method. First, a weight ratio w (wt%) of nitrogen element included in the porous sheet 1 is measured by using a commercially-available CHN elemental analyzer. On the basis of the obtained result, the density d of nitrogen element can be calculated from the following formula.

$$\text{Density d (mmol/g)} = (\text{weight ratio w (wt\%)} \times 1000)/(\text{atomic weight of nitrogen} \times 100)$$

The amount of substance of the amino group per unit volume of the porous sheet 1 is, for example, 4.0 mmol/cm$^3$ or more, and may be 4.3 mmol/cm$^3$ or more, 4.5 mmol/cm$^3$ or more, 5.0 mmol/cm$^3$ or more, 6.0 mmol/cm$^3$ or more, 7.0 mmol/cm$^3$ or more, or even 8.0 mmol/cm$^3$ or more. The upper limit value of the amount of substance of the amino group is not limited in particular, and is 20 mmol/cm$^3$, for example.

The weight ratio of nitrogen element in the porous sheet 1 is, for example, 5 wt% or more and preferably 10 wt% or more. The higher this weight ratio is, the more the acidic gas adsorption ability of the acidic gas adsorbent 10 tends to be improved. The upper limit value of the weight ratio of nitrogen element in the porous sheet 1 is not limited in particular, and is 30 wt%, for example. When all nitrogen element included in the porous sheet 1 is derived from the amino group, the above weight ratio of nitrogen element can be regarded as the weight ratio of the amino group in the porous sheet 1.

As described above, the porous sheet 1 has a three-dimensional network skeleton composed of the polymer P. The three-dimensional network skeleton includes the polymer P as a main component, for example, and may substantially include only the polymer P. The three-dimensional network skeleton may further include another component other than the polymer P. In the porous sheet 1, for example, the above three-dimensional network skeleton extends continuously. The pores included in the porous sheet 1 are, for example, continuous holes continuously formed in a three-dimensional manner. In other words, the porous sheet 1 includes, for example, continuous holes continuously formed in a three-dimensional manner. The porous sheet 1 may have independent holes, or may have through holes penetrating the porous sheet 1. The porous sheet 1 preferably does not have a fiber including the polymer P, for example, and is preferably not a nonwoven fabric including such a fiber. That is, in the present embodiment, the porous sheet 1 excludes, for example, a nonwoven fabric having a fiber including the polymer P.

The thickness of the porous sheet 1 is not limited in particular, and is, for example, 1000 $\mu$m or less, preferably 500 $\mu$m or less, and more preferably 300 $\mu$m or less. As described later, the smaller the thickness of the porous sheet 1 is, the larger the cross-sectional area of a structure, in particular, a honeycomb structure, produced using the acidic gas adsorbent 10, can be adjusted, for example. A structure having an air flow path with a large cross-sectional area is suitable for reducing the pressure loss that occurs, for example, when in contact with acidic gas. In the present embodiment, the porous sheet 1 tends to have a relatively large amount of substance of the amino group per unit volume. With the porous sheet 1, there is a tendency that acidic gas can be sufficiently adsorbed even if the thickness of the sheet 1 is small. The lower limit value of the thickness of the porous sheet 1 is not limited in particular, and is 10 $\mu$m, for example.

The specific surface area of the porous sheet 1 is not limited in particular, and is, for example, 0.1 m²/g or more, preferably 1.0 m²/g or more, and more preferably 2.0 m²/g or more. The upper limit value of the specific surface area of the porous sheet 1 is not limited in particular, and is 10 m²/g, for example. The specific surface area of the porous sheet 1 means the BET (Brunauer-Emmett-Teller) specific surface area in terms of nitrogen gas adsorption. The BET specific surface area can be measured by a method conforming to JIS Z8830: 2013.

The porosity of the porous sheet 1 is, for example, 20% or more, preferably 30% or more, and more preferably 40% or more. The upper limit value of the porosity of the porous sheet 1 is not limited in particular, is, for example, 80%, and may be 60%. The porosity of the porous sheet 1 can be calculated by the following formula on the basis of a volume V (cm³), a weight W (g), and a true density D (g/cm³) of the porous sheet 1. The true density D means the specific gravity of the material forming the porous sheet 1.

$$\text{Porosity (\%)} = 100 \times (V - (W/D))/V$$

A dimensional change of the porous sheet 1 is preferably suppressed during use of the acidic gas adsorbent 10, especially when the acidic gas adsorbent 10 is in contact with water. The porous sheet 1 whose dimensional change is suppressed tends to be less likely to fall off from the support 2, an acidic gas recovery device, or the like during use of the acidic gas adsorbent 10 or the like. Furthermore, the porous sheet 1 also tends to be less likely to be deformed during use of the acidic gas adsorbent 10 or the like and be less likely to cause obstruction to the passage of gas caused by deformation. As described above, a dimensional change of the porous sheet 1 including a fiber structure as a filler tends to be suppressed during use of the acidic gas adsorbent 10 or the like.

As an example, the porous sheet 1 preferably has a dimensional change rate $R_{TD}$ of 5% or less as measured by the following Test 2.

Test 2: The porous sheet 1 is cut out into a test piece with a length of 30 mm and a width of 20 mm. At this time, the longitudinal direction of the test piece is caused to coincide with the MD direction of the porous sheet 1 (the MD direction of a fiber structure in the case of including the fiber structure), and the lateral direction of the test piece is caused to coincide with the TD direction of the porous sheet 1 (the TD direction of the fiber structure in the case of including the fiber structure). The test piece is dried in a vacuum atmosphere at 60°C for 2 hours. The test piece is placed in a dry room having a dew point of about -60°C. The dimensions of the test piece are measured in the dry room, and the obtained values are regarded as the dimensions of the test piece in a dry state. Next, an immersion test in which the test piece is immersed in pure water at 22°C for 2 hours, is performed. The dimensions of the test piece after the immersion test are measured, and the obtained values are regarded as the dimensions of the test piece in a water-absorbed state. The dimensional change rate $R_{TD}$ (%) is calculated from a length $L_{TD1}$ (mm) in the lateral direction of the test piece in the dry state and a length $L_{TD2}$ (mm) in the lateral direction of the test piece in the water-absorbed state.

The dimensional change rate $R_{TD}$ (%) can be calculated by the following formula.

$$\text{Dimensional change rate } R_{TD} = 100 \times |L_{TD2} - L_{TD1}|/L_{TD1}$$

The dimensional change rate $R_{TD}$ of the porous sheet 1 is more preferably 4% or less and may be 3% or less, 2% or less, 1% or less, or even 0.5% or less. The lower limit value of the dimensional change rate $R_{TD}$ is not limited in particular, and is 0.01%, for example.

Furthermore, the porous sheet 1 preferably also has a dimensional change rate $R_{MD}$ of 5% or less as measured by Test 2 above. The dimensional change rate $R_{MD}$ can be calculated by the following formula on the basis of a length $L_{MD1}$ (mm) in the longitudinal direction of the test piece in the dry state and a length $L_{MD2}$ (mm) in the longitudinal direction of the test piece in the water-absorbed state.

$$\text{Dimensional change rate } R_{MD} = 100 \times |L_{MD2} - L_{MD1}|/L_{MD1}$$

The dimensional change rate $R_{MD}$ of the porous sheet 1 is more preferably 4% or less and may be 3% or less, 2% or less, or even 1% or less. The lower limit value of the dimensional change rate $R_{MD}$ is not limited in particular, and is 0.01%, for example.

(Support)

The material of the support 2 is not limited in particular, and examples thereof include: ceramics such as cordierite, alumina, cordierite-$\alpha$ alumina, silicon nitride, zircon mullite, spodumene, alumina-silica magnesia, zircon silicate, sillimanite, magnesium silicate, zircon, petalite, and aluminosilicate; metals such as aluminum, titanium, copper, stainless steel, Fe-Cr alloy, and Cr-Al-Fe alloy; resins such as silicone resin, polyolefin, polyester, polyurethane, polycarbonate, polyether ether ketone, polyphenylene oxide, polyether sulfone, melamine, polyamide, poly(meth)acrylate, polystyrene, poly(meth)acrylonitrile, polyimide, polyfurfural alcohol, phenol furfuryl alcohol, melamine formaldehyde, resorcinol formaldehyde, cresol formaldehyde, phenol formaldehyde, polyvinyl alcohol dialdehyde, polycyanurate, poly(meth)acrylamide, epoxy resin, agar, agarose, and cellulose; and the like. The material of the support 2 is preferably a material that has excellent thermal conductivity and durability and that is less likely to be deteriorated due to rust formation, hydrolysis, etc., when in contact with water.

The support 2 may or may not necessarily have a porous structure. Examples of the support 2 having a porous structure include paper, a nonwoven fabric, a foam, a mesh, and the like. Examples of the support 2 not having a porous structure include a non-porous sheet, a foil, and the like. From the viewpoint of being able to easily produce the acidic gas adsorbent 10 having a corrugated shape, the support 2 is preferably an aluminum sheet, paper, a nonwoven fabric, or the like.

The support 2 may serve as a planar heater, or may be a planar thermoelectric heater or Peltier element.

The thickness of the support 2 is not limited in particular, and is 1 $\mu$m to 100 $\mu$m, for example. The support 2 may be thinner than the porous sheet 1.

(Method for producing acidic gas adsorbent)

A method for producing the acidic gas adsorbent 10 includes, for example, a step (I) of curing a mixed solution L including a porogen and a compound group including an amine monomer, to obtain a cured body B, and a step (II) of removing the porogen from the cured body B having a sheet shape, to obtain the porous sheet 1.

In step (I), the compound group is typically a monomer group including an amine monomer and an epoxy monomer. However, the compound group may include an epoxy prepolymer instead of or together with the epoxy monomer.

The porogen is, for example, a solvent that can dissolve the monomers and the prepolymer included in the compound group and further can cause reaction-induced phase separation after the compound group reacts. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol, polypropylene glycol, and polyoxyalkylene glycols; and ethers such as polyoxyethylene monomethyl ether and polyoxyethylene dimethyl ether. Specific examples of polyoxyalkylene glycols include poly(1,2-butanediol)-6 propylene glycol, polyoxypropylene glyceryl ether, and the like. The porogen may be a polar solvent such as ethyl acetate, N,N-dimethylformamide (DMF), acetonitrile, ethanol, and isopropanol, a non-polar solvent such as toluene, or a mixed solvent of these solvents. The porogen can be used alone, or two types or more thereof may be used in combination.

Another component other than the compound group and the porogen may be further added to the mixed solution L. Examples of the other component include the reaction accelerators described above, and the like.

In step (I), a polymer P is formed by a reaction of the compound group. Accordingly, the mixed solution L is cured to obtain the cured body B. The reaction of the compound group is typically a polymerization reaction of the amine monomer and the epoxy monomer. However, the reaction of the compound group may be a crosslinking reaction of the epoxy prepolymer by the amine monomer. In the reaction of the compound group, the amino group of the amine monomer reacts with the epoxy group of the epoxy monomer or the epoxy prepolymer. The reaction of the compound group can be carried out by applying energy to the mixed solution L. The energy that is applied to the mixed solution L is preferably thermal energy. As an example, the reaction of the compound group can be caused to proceed by heating the mixed solution L at a temperature of 40°C to 100°C. However, the energy that is applied to the mixed solution L may be light energy.

The cured body B includes the polymer P and the porogen. In the cured body B, a co-continuous structure is formed by phase separation of the polymer P and the porogen. The shape of the cured body B obtained in step (I) is typically a sheet shape. The sheet-shaped cured body B can be produced, for example, by applying the mixed solution L onto a support 2 (typically, a support 2 not having a porous structure) and curing the obtained coating film. The method of applying the mixed solution L is not limited in particular, and a roll coating method, a spin coating method, a dip coating method, and the like can be used.

The sheet-shaped cured body B can also be produced by bringing the mixed solution L into contact with another sheet-shaped substrate other than the above-described support 2 and then curing the mixed solution L. As the substrate, for example, a release liner or a fiber structure can be used. The substrate may be a laminate including a release liner and a fiber structure. When a fiber structure is used as the substrate, the mixed solution L tends to permeate the interior of the fiber structure when the mixed solution L is brought into contact with the fiber structure. By curing the mixed solution L in a state where the mixed solution L has permeated the interior of the fiber structure, a cured body including the fiber structure as a filler is obtained.

The shape of the cured body B obtained in step (I) does not have to be a sheet shape, and may be, for example, a block shape, in particular, a cylindrical or columnar shape. A block-shaped cured body B can be produced, for example, by curing the mixed solution L with which a mold is filled in step (I). In this case, the sheet-shaped cured body B to be used in step (II) can be obtained by cutting the block-shaped cured body B in the vicinity of the surface thereof to have a predetermined thickness. As an example, when the cured body B has a cylindrical or columnar shape, the sheet-shaped cured body B can be produced by cutting the cured body B in the vicinity of the surface thereof while rotating the cured body B around a cylindrical or columnar axis.

The method of removing the porogen from the sheet-shaped cured body B in step (II) is not limited in particular. For example, the porogen may be extracted and removed from the cured body B by immersing the cured body B in a solvent. As the solvent for extracting the porogen, water, aliphatic hydrocarbon solvents, aromatic hydrocarbon solvents, aliphatic alcohol solvents, ether solvents, halogen-containing organic solvents, ester solvents, and the like can be used. Examples of aliphatic hydrocarbon solvents include n-hexane, cyclohexane, methylcyclohexane, n-heptane, n-octane, isooctane, petroleum ether, benzine, and the like. Examples of aromatic hydrocarbon solvents include toluene, xylene, mesitylene, benzene, and the like. Examples of aliphatic alcohol solvents include methanol, ethanol, isopropanol, butanol, cyclohexanol, ethylene glycol, propylene glycol, propylene glycol monomethyl ether, diethylene glycol, and the like. Examples of ether solvents include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, anisole, and the like. Examples of halogen-containing organic solvents include dichloromethane, chloroform, carbon tetrachloride, dichloroethane, chlorobenzene, and the like. Examples of ester solvents include ethyl acetate and the like. These solvents can be used individually, or two types or more thereof may be used in combination.

In step (II), for example, a porous sheet 1 having a flat plate shape can be obtained by removing the porogen from the sheet-shaped cured body B. As an example, when the cured body B is produced using the method of applying the mixed solution L onto the support 2, a sheet-shaped acidic gas adsorbent 10 including the porous sheet 1 and the support 2 is obtained by removing the porogen from the cured body B. A self-supporting film of the porous sheet 1 may be produced by a method using another substrate other than the support 2, or the like, and this self-supporting film may be used as the acidic gas adsorbent 10. A self-supporting film of the porous sheet 1 may be produced using a fixing means such as an adhesive sheet, and this self-supporting film fixed to the support 2 may be used as the acidic gas adsorbent 10.

The acidic gas adsorbent 10 produced by the above method normally has a flat plate shape. The acidic gas adsorbent 10 having a flat plate shape may be further subjected to corrugating. Accordingly, an acidic gas adsorbent 10 having a corrugated shape can be obtained.

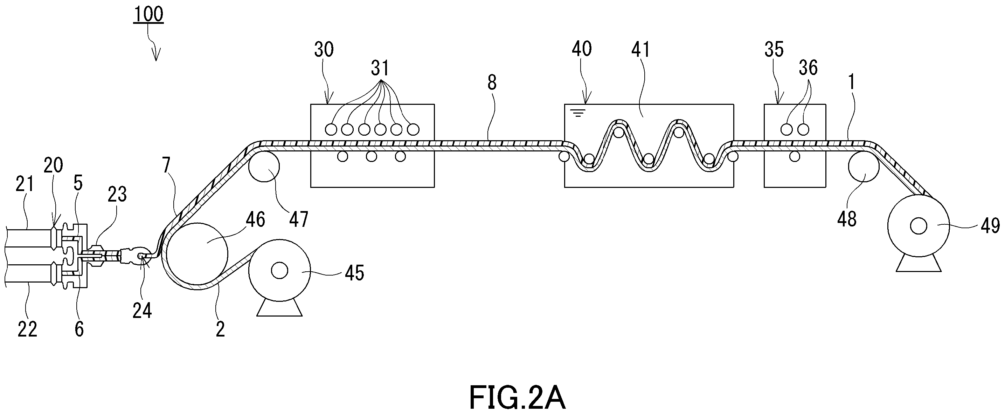

As an example, the acidic gas adsorbent 10 can be produced using a production device 100 shown in FIG. 2A. FIG. 2A shows a schematic configuration of the production device 100. The production device 100 includes an unwinding roll 45 for unwinding a support 2, a winding roll 49 for winding a produced acidic gas adsorbent 10, and a plurality of guide rolls 46, 47 and 48 located between the unwinding roll 45 and the winding roll 49. In the production device 100, the support 2 is conveyed from the unwinding roll 45 to the winding roll 49. The production device 100 further includes a mixed solution discharge unit 20, a first heating unit 30, an extraction unit 40, and a second heating unit 35, and these units are aligned in this order in the conveyance direction of the support 2. In the production device 100, another substrate other than the support 2 may be used instead of the support 2.

The mixed solution discharge unit 20 includes a first supply section 21, a second supply section 22, a mixing section 23, and a discharge port 24. The first supply section 21 can feed a first raw material 5 to the mixing section 23.

The second supply section 22 can feed a second raw material 6 to the mixing section 23. As an example, the first raw material 5 includes an amine monomer, and the second raw material 6 includes an epoxy monomer and/or an epoxy prepolymer. At least one selected from the group consisting of the first raw material 5 and the second raw material 6 includes a porogen. A mixed solution L is prepared by mixing the first raw material 5 and the second raw material 6 in the mixing section 23.

The mixed solution L prepared in the mixing section 23 is discharged to the outside of the mixed solution discharge unit 20 through the discharge port 24. For example, the mixed solution discharge unit 20 is located near the guide roll 46, and can apply the mixed solution L onto the support 2 conveyed from the unwinding roll 45 to the guide roll 46. Accordingly, a coating film 7 can be formed on the support 2. The coating film 7, together with the support 2, passes through the guide roll 47 and is sent to the first heating unit 30.

The first heating unit 30 includes a heater 31 for heating the coating film 7. The coating film 7 is heated by moving in the first heating unit 30. Accordingly, the coating film 7 is cured to form a sheet-shaped cured body 8. The cured body 8 is sent to the extraction unit 40 together with the support 2.

The extraction unit 40 contains a solvent 41 for extracting the porogen from the cured body 8. In the extraction unit 40, the cured body 8 is immersed in the solvent 41. Accordingly, the porogen is removed from the cured body 8 to form a porous sheet 1. The porous sheet 1 is sent to the second heating unit 35 together with the support 2.

The second heating unit 35 includes a heater 36 for drying the porous sheet 1 sent from the extraction unit 40. The porous sheet 1 is heated by moving in the second heating unit 35. Accordingly, the porous sheet 1 is dried to obtain a sheet-shaped acidic gas adsorbent 10 including the porous sheet 1 and the support 2. The acidic gas adsorbent 10 passes through the guide roll 48 and is wound on the winding roll 49.

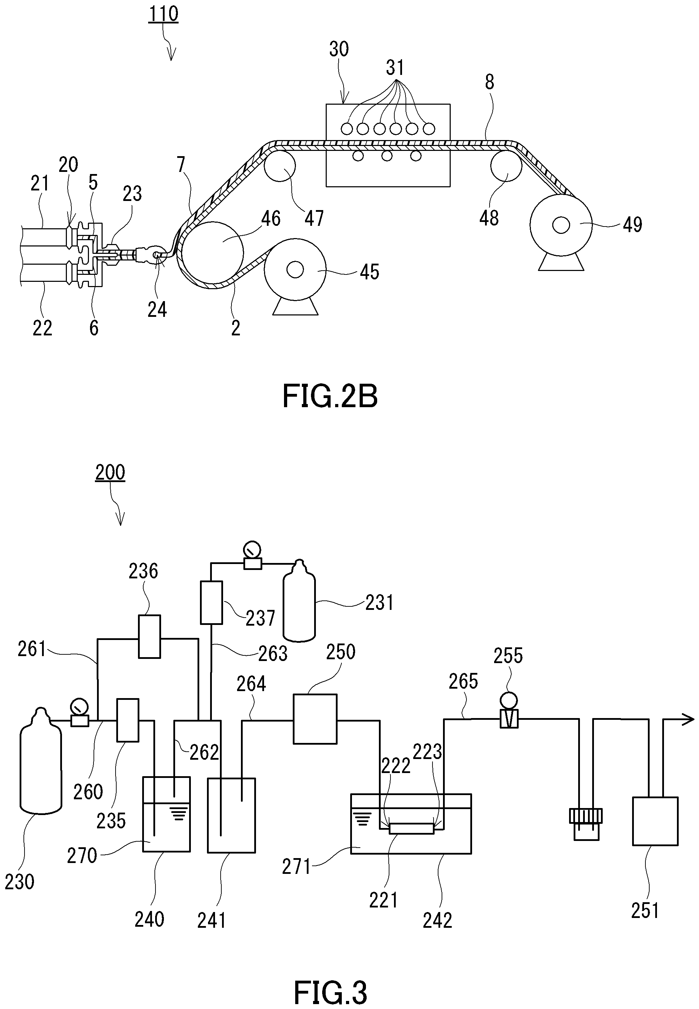

The production device 100 for the acidic gas adsorbent 10 is not limited to the one shown in FIG. 2A. FIG. 2B shows a schematic configuration of a production device 110 according to a modification. As shown in FIG. 2B, the production device 110 does not include the extraction unit 40 and the second heating unit 35. Except for the above, the configuration of the production device 110 is the same as that of the production device 100. Therefore, elements that are common to these production devices 100 and 110 are designated by the same reference characters, and the description thereof is sometimes omitted. The following descriptions of each embodiment may be applied to each other as long as there is no technical inconsistency. Furthermore, each embodiment may be combined with each other as long as there is no technical inconsistency.

In the production device 110, the cured body 8 formed in the first heating unit 30, together with the support 2, passes through the guide roll 48 and is wound on the winding roll 49. Accordingly, a wound body of the cured body 8 and the support 2 is obtained. By immersing the wound body in a solvent and extracting the porogen from the cured body 8, a sheet-shaped acidic gas adsorbent 10 can be obtained.

(Adsorption amount of carbon dioxide by acidic gas adsorbent)

The acidic gas adsorbent 10 of the present embodiment has a tendency that the adsorption ability with respect to acidic gas such as carbon dioxide is high. As an example, an adsorption amount a of carbon dioxide when the acidic gas adsorbent 10 is caused to be in contact with mixed gas G composed of carbon dioxide, nitrogen, and water vapor for 15 hours is, for example, 0.1 mmol/cm$^3$ or more, preferably 0.3 mmol/cm$^3$ or more, more preferably 0.5 mmol/cm$^3$ or more, further preferably 0.7 mmol/cm$^3$ or more, particularly preferably 0.8 mmol/cm$^3$ or more, and especially preferably 1.0 mmol/cm$^3$ or more. The upper limit value of the adsorption amount a of carbon dioxide is not limited in particular, and is 10 mmol/cm$^3$, for example.

[Method for measuring adsorption amount of carbon dioxide]

In the following, a method for measuring the adsorption amount a of carbon dioxide will be described. The adsorption amount a can be measured by using a measurement device 200 shown in FIG. 3, for example. The measurement device 200 includes a first tank 230 and a second tank 231. As an example, the first tank 230 stores dry-state nitrogen, and the second tank 231 stores mixed gas of dry-state nitrogen and dry-state carbon dioxide. The concentration of carbon dioxide in the mixed gas in the second tank 231 is 5 vol%, for example.

The measurement device 200 further includes a first container 240 containing water 270, and a first path 260 for sending nitrogen from the first tank 230 to the first container 240. The first path 260 has one end connected to a gas outlet of the first tank 230, and the other end disposed in the water 270 in the first container 240. Nitrogen sent from the first tank 230 to the first container 240 is humidified by coming into contact with the water 270. On the first path 260, a massflow controller 235 for adjusting the flow rate of nitrogen that is sent from the first tank 230 to the first container 240 is disposed.

The measurement device 200 further includes a second container 241, a second path 262, and a bypass path 261. The second path 262 connects the first container 240 and the second container 241 to each other. Nitrogen sent to the first container 240 and humidified is sent through the second path 262 to the second container 241. The bypass path 261 is branched from the first path 260 at a position between the first tank 230 and the massflow controller 235 and is connected to the second path 262. A part of the nitrogen sent from the first tank 230 flows into the bypass path 261 and is sent through the second path 262 to the second container 241. On the bypass path 261, a massflow controller 236 for adjusting the flow rate of nitrogen that is sent from the first tank 230 to the bypass path 261 is disposed.

The measurement device 200 further includes a third path 263 for sending the mixed gas from the second tank 231 to the second path 262. The third path 263 has one end connected to a gas outlet of the second tank 231 and the other end connected to the second path 262. On the third path 263, a massflow controller 237 for adjusting the flow rate of the mixed gas that is sent from the second tank 231 to the second path 262 is disposed. The mixed gas sent to the second path 262 is sent through the second path 262 to the second container 241.

The measurement device 200 further includes a third container 242 and a fourth path 264. The third container 242 contains water 271 and an adsorption part 221 disposed in the water 271. In the third container 242, the temperature of the water 271 is maintained at 20°C. The adsorption part 221 has a gas inlet 222 and a gas outlet 223. The adsorption part 221 contains the acidic gas adsorbent 10. The adsorption part 221 is configured such that the water 271 does not permeate therein. Typically, the adsorption part 221 is a tube composed of a hydrophobic resin, e.g., a fluorine resin such as tetrafluoroethylene-perfluoroalkoxyethylene copolymer (PFA). As an example, the tube as the adsorption part 221 has an inner diameter of 4 mm and an outer diameter of 6 mm. The adsorption part 221 is configured to be attachable to/detachable from the measurement device 200.

The measurement device 200 can also be used as an acidic gas adsorption device including the adsorption part 221. The present invention provides, in another aspect thereof, an acidic gas adsorption device 200 including the adsorption part 221 having the gas inlet 222 and the gas outlet 223, wherein the adsorption part 221 contains the acidic gas adsorbent 10. The adsorption part 221 of the acidic gas adsorption device 200 may contain a structure described later including the acidic gas adsorbent 10.

The fourth path 264 connects the second container 241 and the third container 242 to each other. Specifically, the fourth path 264 is connected to the gas inlet 222 of the adsorption part 221 in the third container 242. In the fourth path 264, a first concentration meter 250 for measuring the concentration of carbon dioxide in the gas that is supplied to the adsorption part 221 is disposed. As the first concentration meter 250, for example, a $CO_2/H_2O$ gas analyzer, LI-850-3, manufactured by LI-COR, Inc., can be used.

The measurement device 200 further includes a fifth path 265 connected to the gas outlet 223 of the adsorption part 221 and for discharging gas from the adsorption part 221 to the outside of the measurement device 200. On the fifth path 265, a back pressure valve 255 and a second concentration meter 251 are disposed. The back pressure valve 255 allows the pressure in the adsorption part 221 to be adjusted to a constant value. The second concentration meter 251 can measure the concentration of carbon dioxide in the gas that is discharged from the adsorption part 221. As the second concentration meter 251, for example, a $CO_2/H_2O$ gas analyzer, LI-850-3, manufactured by LI-COR, Inc., can be used.

Each path of the measurement device 200 is composed of a metal-made or resin-made pipe, for example.

[Pretreatment]

In the method for measuring the adsorption amount a, first, a drying process is performed with respect to the acidic gas adsorbent 10. The drying process is performed by processing the acidic gas adsorbent 10 for two hours or more under a condition of 60°C, in a vacuum atmosphere, for example. Next, in a dry room having a dew point of about -60°C, the adsorption part 221 is filled with the acidic gas adsorbent 10 having been subjected to the drying process. At this time, the dimensions of the acidic gas adsorbent 10 are measured in advance to identify the volume of the acidic gas adsorbent 10. The weight of the acidic gas adsorbent 10 with which the adsorption part 221 is filled is 50 mg, for example. Next, the fourth path 264 and the fifth path 265 are connected to both ends of the adsorption part 221, and the adsorption part 221 is immersed in the water 271 in the third container 242.

Next, nitrogen from the first tank 230 and the mixed gas from the second tank 231 are supplied to the second container 241 through the first path 260, the second path 262, the bypass path 261, and the third path 263 of the measurement device 200. In the second container 241, these gases are mixed, and the mixed gas G composed of carbon dioxide, nitrogen, and water vapor is obtained. In the second container 241, the concentration of carbon dioxide in the mixed gas G is adjusted to 400 vol ppm. The mixed gas G has a temperature of 20°C and a humidity of 50%RH. The mixed gas G is supplied to the adsorption part 221 through the fourth path 264, at a sufficient flow rate with respect to the weight of the acidic gas adsorbent 10, e.g., at a flow rate of 300 mL/min with respect to 50 mg of the acidic gas adsorbent 10. In the adsorption part 221, the pressure of the mixed gas G is adjusted by the back pressure valve 255, to 107 kPa.

Next, in a state where the mixed gas G is supplied to the adsorption part 221, the adsorption part 221 is taken out of the third container 242, and the adsorption part 221 is immersed in a hot water bath (not shown) at 80°C for two hours or more. Immersion of the adsorption part 221 in the hot water bath is performed until the concentration of carbon dioxide measured by the first concentration meter 250 and the concentration of carbon dioxide measured by the second concentration meter 251 have substantially the same value. Accordingly, with respect to the acidic gas adsorbent 10 in the adsorption part 221, the pretreatment is completed.

[Adsorption test]

Next, in a state where the mixed gas G is supplied to the adsorption part 221, the adsorption part 221 is taken out of the hot water bath and is immersed in the water 271 in the third container 242. Accordingly, an adsorption test is started with respect to the acidic gas adsorbent 10 in the adsorption part 221. The adsorption test is performed until 15 hours elapses from the start. When the adsorption test is performed for 15 hours, adsorption of carbon dioxide by the acidic gas adsorbent 10 can, normally, be regarded as having reached equilibrium.

In the adsorption test, an amount of substance M of carbon dioxide adsorbed by the acidic gas adsorbent 10 until 15 hours from the start is measured. The amount of substance M of carbon dioxide adsorbed by the acidic gas adsorbent 10 can be calculated from a result of measuring, over time, the difference between the concentration of carbon dioxide measured by the first concentration meter 250 and the concentration of carbon dioxide measured by the second concentration meter 251. On the basis of the amount of substance M, the amount of substance of carbon dioxide adsorbed by 1 cm$^3$ of the acidic gas adsorbent 10 in 15 hours is calculated, and the obtained calculated value is identified as the adsorption amount a.

As described above, in a conventional adsorbent, for example, the pores of porous particles supported on a substrate are filled with an amine compound. Such an adsorbent requires porous particles and a binding agent for binding the porous particles, so that it is difficult to adjust the amount of substance of the amino group per unit volume of the adsorbent to be large. In the conventional adsorbent, if the filling amount of the amine compound is increased in order to increase the amount of substance of the amino group per unit volume, the pores of the porous particles may become closed, and the adsorption performance for acidic gas may decrease. In contrast, in the acidic gas adsorbent 10 of the present embodiment, by utilizing the porous sheet 1 having a three-dimensional network skeleton composed of the polymer P, the amount of substance of the amino group per unit volume can be easily increased while the pores of the porous sheet 1 are maintained. The acidic gas adsorbent 10 of the present embodiment tends to have high adsorption performance for acidic gas, and can be said to be suitable for adsorption of acidic gas.

(Usage of acidic gas adsorbent)

The acidic gas adsorbent 10 of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent 10 can be used according to the following method, for example. First, mixed gas including acidic gas is brought into contact with the acidic gas adsorbent 10. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent 10. However, the mixed gas that is brought into contact with the acidic gas adsorbent 10 may be pressurized.

The acidic gas adsorbent 10 having come into contact with the mixed gas adsorbs acidic gas included in the mixed gas. Operation of bringing the mixed gas into contact with the acidic gas adsorbent 10 is performed until acidic gas adsorption by the acidic gas adsorbent 10 reaches equilibrium, for example.

Next, a regeneration process is performed with respect to the acidic gas adsorbent 10 having adsorbed acidic gas. The regeneration process can be performed by heating the acidic gas adsorbent 10, for example. The heating temperature of the acidic gas adsorbent 10 is 50 to 80°C, for example. The acidic gas adsorbent 10 may be heated in a reduced-pressure atmosphere or a vacuum atmosphere. Through the heating of the acidic gas adsorbent 10, acidic gas is desorbed from the acidic gas adsorbent 10. Accordingly, the acidic gas adsorbent 10 is regenerated and the acidic gas adsorbent 10 can be repeatedly used. The acidic gas, in particular, carbon dioxide, desorbed from the acidic gas adsorbent 10 can be utilized as synthesis raw material for chemicals or dry ice. The adsorption operation of acidic gas by means of the acidic gas adsorbent 10 and the regeneration process of the acidic gas adsorbent 10 can be performed by using the measurement device 200 (acidic gas adsorption device) described above and an acidic gas recovery device described later.

<Modification of acidic gas adsorbent>

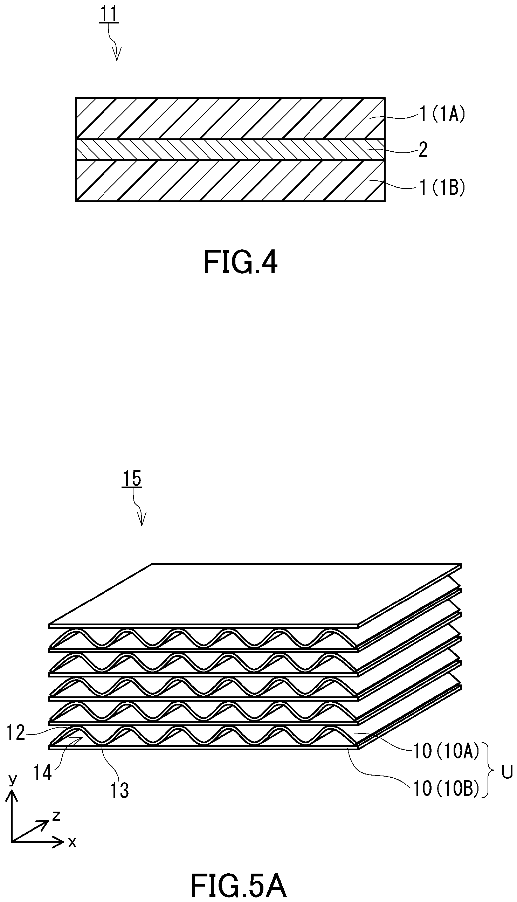

The acidic gas adsorbent 10 may include a plurality of porous sheets 1. An acidic gas adsorbent 11 shown in FIG. 4 includes two porous sheets 1A and 1B. Except for this, the structure of the acidic gas adsorbent 11 is the same as that of the acidic gas adsorbent 10.

In the acidic gas adsorbent 11, the support 2 is located between the two porous sheets 1A and 1B and is in direct contact with each of the porous sheets 1A and 1B. The composition and the structure of the porous sheet 1A may be the same as or different from those of the porous sheet 1B.

<Embodiment of structure>

As shown in FIG. 5A, a structure 15 of the present embodiment includes the above-described acidic gas adsorbent 10 and an air flow path 14. Instead of the acidic gas adsorbent 10, the acidic gas adsorbent 11 shown in FIG. 4 can also be used. The structure 15 is typically a honeycomb structure having a plurality of air flow paths 14 extending in the same direction.

In the structure 15, the acidic gas adsorbent 10 preferably includes a support 2 together with a porous sheet 1. In the acidic gas adsorbent 10, the porous sheet 1 may include a fiber structure as a filler. However, the acidic gas adsorbent 10 included in the structure 15 may be a self-supporting film of the porous sheet 1.

The structure 15 includes, for example, an adsorbent unit U in which an acidic gas adsorbent 10A having a corrugated shape and an acidic gas adsorbent 10B having a flat plate shape are stacked. In the acidic gas adsorbent 10A, a plurality of hill portions 12 and a plurality of valley portions 13 are alternately aligned. The air flow path 14 is formed between each hill portion 12 or each valley portion 13 of the acidic gas adsorbent 10A and the acidic gas adsorbent 10B. In the present embodiment, a direction x is a direction (wave direction) in which the plurality of hill portions 12 and the plurality of valley portions 13 of the acidic gas adsorbent 10A are alternately aligned. A direction y is a direction in which the acidic gas adsorbents 10A and 10B are stacked in the adsorbent unit U. A direction z is a direction that is orthogonal to each of the directions x and y and in which the air flow paths 14 extend.

The structure 15 includes, for example, a plurality of adsorbent units U. The number of adsorbent units U in the structure 15 is not limited in particular, and is 2 to 100, for example. In the structure 15, the plurality of adsorbent units U are stacked in the direction y such that a plurality of acidic gas adsorbents 10A and a plurality of acidic gas adsorbents 10B are alternately aligned. When the plurality of adsorbent units U are stacked, the structure 15 has a block shape.

Each air flow path 14 is a through hole penetrating the structure 15 in the direction z. The air flow path 14 is surrounded by the acidic gas adsorbents 10A and 10B. In the structure 15, acidic gas is efficiently adsorbed by the acidic gas adsorbents 10A and 10B while moving in the direction z through the air flow path 14.

In the structure 15, the smaller the thicknesses of the porous sheets 1 in the acidic gas adsorbents 10A and 10B are, the larger the cross-sectional area of each air flow path 14 can be adjusted. The structure 15 in which the cross-sectional area of each air flow path 14 is large is suitable for reducing the pressure loss that occurs, for example, when in contact with acidic gas. With the structure 15 having reduced pressure loss, for example, the power of a fan used to move acidic gas can be reduced. Since each acidic gas adsorbent 10 tends to have a relatively large amount of substance of the amino group per unit volume, there is a tendency that acidic gas can be sufficiently adsorbed even if the thickness of each porous sheet 1 is small.

<Modification of structure>

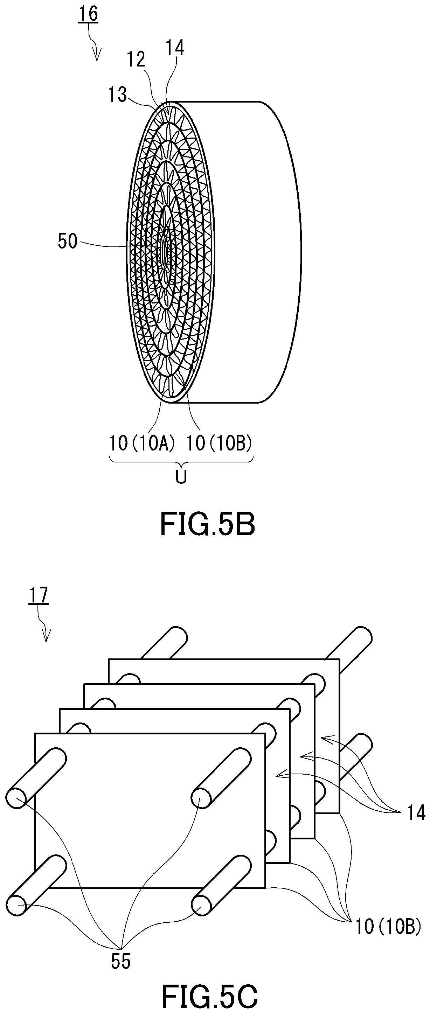

The shape of the structure 15 including the acidic gas adsorbents 10 is not limited to the one shown in FIG. 5A. A structure 16 shown in FIG. 5B has a shape in which one adsorbent unit U is wound on a center tube 50. Except for this, the configuration of the structure 16 is the same as that of the structure 15.

The structure 16 has a columnar shape. In the structure 16, the plurality of hill portions 12 and the plurality of valley portions 13 of the acidic gas adsorbent 10A are alternately aligned in the circumferential direction of the structure 16. The air flow path 14 formed between each hill portion 12 or each valley portion 13 of the acidic gas adsorbent 10A and the acidic gas adsorbent 10B penetrates the structure 16 in a direction in which the center tube 50 extends. In the structure 16, acidic gas is efficiently adsorbed by the acidic gas adsorbents 10A and 10B while moving through the air flow path 14 in the direction in which the center tube 50 extends.

<Another modification of structure>

The structure does not have to include the acidic gas adsorbent 10A having a corrugated shape, and does not have to be a honeycomb structure such as the structures 15 and 16. A structure 17 shown in FIG. 5C includes only an acidic gas adsorbent 10B having a flat plate shape as the acidic gas adsorbent 10. Specifically, the structure 17 includes a plurality of acidic gas adsorbents 10B, and the plurality of acidic gas adsorbents 10B are aligned with voids therebetween. The void between two acidic gas adsorbents 10B serves as an air flow path 14.

The structure 17 may further include a fixing member 55 which fixes the plurality of acidic gas adsorbents 10B in order to ensure the above-described air flow paths 14. The fixing member 55 is, for example, a rod. As an example, a through hole is formed in each of the plurality of acidic gas adsorbents 10B so as to penetrate the acidic gas adsorbent 10B in the thickness direction thereof, and the plurality of acidic gas adsorbents 10B are fixed by inserting the rod as the fixing member 55 into the through hole of each acidic gas adsorbent 10B. The rod as the fixing member 55 may be a bolt having an external thread formed on a side surface thereof. In this case, the air flow path 14 can be more reliably ensured by screwing a nut onto the bolt at a position between two acidic gas adsorbents 10B. In this example, the nut serves as a spacer.

In the example of FIG. 5C, the plurality of acidic gas adsorbents 10B each have a rectangular shape in a plan view, and have through holes formed near four corners thereof. Furthermore, an acidic gas adsorbent 10C includes four fixing members 55, and the four fixing members 55 are inserted into the four through holes formed at the four corners of each acidic gas adsorbent 10B, respectively. However, the number and the positions of through holes formed in each acidic gas adsorbent 10B and the number of fixing members 55 are not limited to the example of FIG. 5C.

In the structure 17, acidic gas is efficiently adsorbed by two acidic gas adsorbents 10B while moving through the air flow path 14 between the two acidic gas adsorbents 10B.

<Embodiment of acidic gas recovery device>

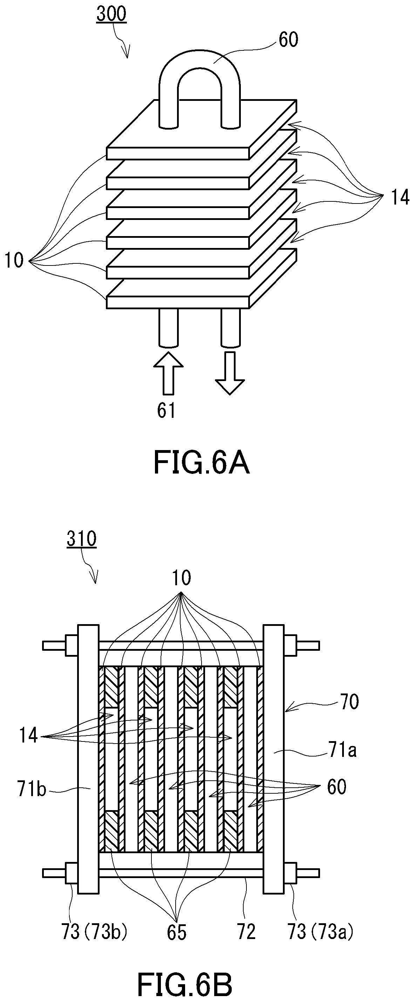

As shown in FIG. 6A, an acidic gas recovery device 300 of the present embodiment includes the above-described acidic gas adsorbent 10 and a medium path 60. Instead of the acidic gas adsorbent 10, the acidic gas adsorbent 11 shown in FIG. 4 can also be used. In the acidic gas recovery device 300, during desorption operation in which acidic gas adsorbed by the acidic gas adsorbent 10 is desorbed from the acidic gas adsorbent 10, a heat medium 61 which heats the acidic gas adsorbent 10 passes through the medium path 60.

In the acidic gas recovery device 300, the acidic gas adsorbent 10 preferably includes a support 2 together with a porous sheet 1. In the acidic gas adsorbent 10, the porous sheet 1 may include a fiber structure as a filler. However, the acidic gas adsorbent 10 included in the acidic gas recovery device 300 may be a self-supporting film of the porous sheet 1.

The acidic gas recovery device 300 includes, for example, a plurality of acidic gas adsorbents 10. The plurality of acidic gas adsorbents 10 may be aligned with voids therebetween, and the void between two acidic gas adsorbents 10 may serve as an air flow path 14. In the acidic gas recovery device 300, the configurations of the acidic gas adsorbents 10 and the air flow paths 14 may be the same as those described for the structures 15 to 17.

In the acidic gas recovery device 300, the medium path 60 is composed of, for example, a pipe made of a metal such as copper, specifically, a heat transfer tube. In the acidic gas recovery device 300, the medium path 60 penetrates each acidic gas adsorbent 10 in the thickness direction of the acidic gas adsorbent 10, for example. Specifically, in the acidic gas adsorbents 10, through holes are formed so as to penetrate the acidic gas adsorbents 10 in the thickness direction thereof, and the medium path 60 is inserted into the through holes of the acidic gas adsorbents 10. The acidic gas recovery device 300 typically has a structure similar to that of a fin tube heat exchanger including heat transfer fins and a heat transfer tube penetrating the heat transfer fins.

The medium path 60 may have a U-shape, and may be inserted into two through holes formed in each acidic gas adsorbent 10. The number of through holes formed in each acidic gas adsorbent 10 and the number of medium paths 60 are not limited to those shown in FIG. 6A. For example, four or more through holes may be formed in each acidic gas adsorbent 10, and two or more medium paths 60 each having a U-shape may be inserted into the through holes of each acidic gas adsorbent 10.

As described above, the medium path 60 serves as a path for the heat medium 61 which heats the acidic gas adsorbent 10 during desorption operation. However, the medium path 60 can also be used as a path for a cooling medium that cools the acidic gas adsorbent 10 after the desorption operation. That is, the medium path 60 may serve as both a path for the heat medium 61 and a path for the cooling medium.

The acidic gas recovery device 300 further includes a casing (not shown) in which the acidic gas adsorbents 10 and the medium path 60 are housed. The casing has, for example, a mixed gas inlet for sending a mixed gas including acidic gas into the interior of the casing. The casing may further have a desorption gas outlet for discharging desorption gas desorbed from the acidic gas adsorbents 10, to the outside of the casing during desorption operation, and a purge gas inlet for sending purge gas to the inside of the casing. In the casing, the mixed gas inlet may also serve as a purge gas inlet. Furthermore, the casing may have a medium inlet for sending the heat medium 61 or the cooling medium to the medium path 60 and a medium outlet for discharging the heat medium 61 or the cooling medium from the medium path 60.

[Method for operating acidic gas recovery device]

The acidic gas recovery device 300 repeatedly performs adsorption operation in which acidic gas is adsorbed by the acidic gas adsorbents 10 and desorption operation in which acidic gas adsorbed by the acidic gas adsorbents 10 is desorbed from the acidic gas adsorbents 10, for example. Acidic gas can be recovered by performing adsorption operation and desorption operation using the acidic gas recovery device 300.

(Adsorption operation)

The adsorption operation of the acidic gas recovery device 300 is performed, for example, as follows. First, mixed gas including acidic gas is sent to the interior of the casing through the above-described mixed gas inlet. Examples of the mixed gas include those described above. The mixed gas comes into contact with the acidic gas adsorbents 10 while moving through the air flow paths 14, for example. Accordingly, the acidic gas adsorbents 10 adsorb the acidic gas included in the mixed gas. The adsorption operation is performed until acidic gas adsorption by the acidic gas adsorbents 10 reaches equilibrium, for example.

(Desorption operation)

The desorption operation of the acidic gas recovery device 300 is performed, for example, as follows. First, purge gas is sent to the interior of the casing through the above-described purge gas inlet, and the purge gas is discharged to the outside of the casing through the desorption gas outlet. By this operation, the mixed gas remaining inside the casing can be discharged to the outside of the casing, and the interior of the casing can be filled with the purge gas. As the purge gas, for example, water vapor gas or gas including acidic gas such as carbon dioxide at a high concentration can be used. Instead of or together with the operation of sending the purge gas to the interior of the casing, an operation of depressurizing the interior of the casing may be performed. This depressurization operation can be performed, for example, by a depressurization device connected to the desorption gas outlet of the casing, or the like.
Next, in a state where the purge gas is supplied to the interior of the casing, the heat medium 61 is sent to the medium path 60. As the heat medium 61, hot water, high-temperature gas, or the like can be used. Specific examples of gas included in the high-temperature gas include chlorofluorocarbon, carbon dioxide, air, water vapor, and the like. The heat medium 61 can be prepared utilizing, for example, waste heat, a heat pump, self-heat regeneration, or the like.
By sending the heat medium 61 to the medium path 60, heat exchange occurs between the heat medium 61 and the acidic gas adsorbents 10 via the medium path 60, and the acidic gas adsorbents 10 are heated. The heating temperature of each acidic gas adsorbent 10 is 50 to 80°C, for example. Accordingly, the acidic gas is desorbed from the acidic gas adsorbents 10. The desorption gas desorbed from the acidic gas adsorbents 10 is discharged through the desorption gas outlet together with the purge gas. Accordingly, the acidic gas can be recovered. When the purge gas includes water vapor, the water vapor can be removed by cooling the purge gas discharged through the desorption gas outlet and condensing the water vapor. It is not necessarily necessary to use the heat medium 61 in order to heat the acidic gas adsorbents 10. For example, when each support 2 serves as a planar heater, each acidic gas adsorbent 10 may be heated by energizing the support 2.
The acidic gas recovery device 300 is configured such that the heat medium 61 does not come into direct contact with the desorption gas during the desorption operation. With the acidic gas recovery device 300, acidic gas can be efficiently recovered. The recovered acidic gas, in particular, carbon dioxide, can be utilized as synthesis raw material for chemicals or dry ice.

(Preparation operation)

The acidic gas recovery device 300 may perform preparation operation for performing the adsorption operation after the desorption operation. The preparation operation is performed, for example, as follows. First, the supply of the purge gas to the interior of the casing is stopped, and the heat medium 61 is also discharged from the medium path 60. Next, a cooling medium is sent to the medium path 60. As the cooling medium, an antifreeze or the like can be used. Heat exchange occurs between the cooling medium and the acidic gas adsorbents 10 via the medium path 60, and the acidic gas adsorbents 10 are cooled. The acidic gas adsorbents 10 are cooled to normal temperature (25°C), for example. After the acidic gas adsorbents 10 are cooled, the preparation for the adsorption operation is completed by discharging the cooling medium from the medium path 60.

<Modification of acidic gas recovery device>

The acidic gas recovery device is not limited to the one shown in FIG. 6A. For example, in an acidic gas recovery device 310 shown in FIG. 6B, a medium path 60 is formed between two acidic gas adsorbents 10. Specifically, in the acidic gas recovery device 310, among a plurality of voids formed between a plurality of acidic gas adsorbents 10, some voids serve as medium paths 60, and the remaining voids serve as air flow paths 14. The medium paths 60 and the air flow paths 14 are alternately aligned along the arrangement direction in which the plurality of acidic gas adsorbents 10 are arranged. The acidic gas recovery device 310 typically has a structure similar to that of a plate heat exchanger in which a plurality of heat transfer plates are stacked.

In the acidic gas recovery device 310, each acidic gas adsorbent 10 preferably includes a support 2 together with a porous sheet 1. In the acidic gas recovery device 310, for example, the porous sheet 1 included in each acidic gas adsorbent 10 faces the air flow path 14, and the support 2 included in each acidic gas adsorbent 10 faces the medium path 60. In the acidic gas recovery device 310, a spacer 65 is disposed in each air flow path 14, and a spacer (not shown) is also disposed in each medium path 60. These spacers are configured to ensure the air flow paths 14 and the medium paths 60, introduce an appropriate fluid into each path, and also prevent the fluid from leaking into other paths. In FIG. 6B, each air flow path 14 may be connected to the external space of the acidic gas recovery device 310 on the far side and the near side of the drawing sheet thereof, thereby allowing mixed gas to be taken into the air flow path 14 from the external space. Furthermore, a member may be disposed between each air flow path 14 and the external space so as to block the connection therebetween during desorption operation of the acidic gas recovery device 310.

The acidic gas recovery device 310 further includes a restraining member 70 which restrains the plurality of acidic gas adsorbents 10. The restraining member 70 has, for example, a pair of plate members 71a and 71b, a rod 72, and fixing members 73. The plate members 71a and 71b are aligned in the arrangement direction of the plurality of acidic gas adsorbents 10, and sandwich the plurality of acidic gas adsorbents 10. With the plate members 71a and 71b, a pressure can be applied to the plurality of acidic gas adsorbents 10 in the arrangement direction thereof. In the plate members 71a and 71b, the desorption gas outlet, the purge gas inlet, the medium inlet, the medium outlet, and the like which are described above for the acidic gas recovery device 310 may be formed.

Through holes are formed in the plate members 71a and 71b, respectively, and the rod 72 is inserted into the through holes of the plate members 71a and 71b. The rod 72 may be a bolt having an external thread formed on a side surface thereof. Each fixing member 73 fixes, for example, one plate member out of the plate members 71a and 71b and the rod 72 to each other. The fixing member 73 is typically a nut having an internal thread that can be screwed with the rod 72. The restraining member 70 has a fixing member 73a which fixes the plate member 71a and the rod 72 to each other, and a fixing member 73b which fixes the plate member 71b and the rod 72 to each other.

In the example of FIG. 6B, two rods 72 are fixed by the fixing members 73, respectively. However, the number of rods 72, etc., are not limited to the example of FIG. 6B.

For the acidic gas recovery device 310, the same operation method as the operation method described above for the acidic gas recovery device 300 can be performed. In the acidic gas recovery device 310, a medium path 60 is formed between two acidic gas adsorbents 10. With this configuration, the entirety of each acidic gas adsorbent 10 can be uniformly heated by the heat medium passing through each medium path 60 in the desorption operation.

Furthermore, unlike the acidic gas recovery device 300, the acidic gas recovery device 310 is configured such that the air flow paths 14 do not interfere with the medium paths 60. Therefore, in the acidic gas recovery device 310, the pressure loss caused by the mixed gas passing through the air flow paths 14 in the adsorption operation tends to be small.

Components such as the acidic gas adsorbents 10 are more easily detached from the acidic gas recovery device 310 than the acidic gas recovery device 300. By detaching the acidic gas adsorbents 10 from the acidic gas recovery device 310, it is easier to perform replacement of the acidic gas adsorbents 10. Furthermore, by detaching each component of the acidic gas recovery device 310, it is easier to perform maintenance such as cleaning operations on each component.

[Example]

In the following, the present invention will be described in further detail using Examples and Comparative Examples. However, the present invention is not limited thereto.

(Example 1)

First, 5.22 g of poly(1,2-butanediol)-6 propylene glycol (UNIOL (registered trademark) PB-500, manufactured by NOF CORPORATION) and 5.22 g of polyoxypropylene glyceryl ether (UNILUB (registered trademark) DGP-700, manufactured by NOF CORPORATION) were added to a 50-mL Laboran screw tube bottle (manufactured by AS ONE Corporation). In the obtained mixed solution, 2.55 g of ethylene glycol diglycidyl ether (EX-810, manufactured by Nagase ChemteX Corporation) and 3.83 g of pentaerythritol tetraglycidyl ether (SHOFREE (registered trademark) PETG, manufactured by Showa Denko K.K.) were dissolved, to prepare a mixed solution of an epoxy monomer and a porogen.

Next, 6.57 g of triethylenetetramine (manufactured by Tosoh Corporation) was added to this mixed solution to prepare a mixed solution of the epoxy monomer, an amine monomer, and the porogen. In this mixed solution, the ratio (E/A) of an equivalent (E) of the epoxy group included in the epoxy monomer relative to an equivalent (A) of active hydrogen of the primary amino group included in the amine monomer was 0.4.

Next, a tabletop shaker (Angel Vibrator Digital 60 Hz) was set to intensity 5, and the mixed solution was shaken for 2 minutes. Then, the mixed solution was applied onto a 20-pm-thick aluminum sheet using an applicator having a gap of 350 $\mu$m. The obtained coating film was cured by allowing the coating film to stand in a dryer at 120°C for 30 minutes. Accordingly, a sheet-shaped cured body including a polymer P having an amino group was obtained. An operation of immersing the cured body in ethyl acetate at 60°C for 30 minutes was repeated twice with liquid replacement. Accordingly, the porogen was removed from the cured body to form a porous sheet. Next, the porous sheet was dried in a dryer at 60°C for 30 minutes to remove the aluminum sheet to obtain an acidic gas adsorbent (self-supporting film of the porous sheet) of Example 1. In Example 1, the porous sheet had a three-dimensional network skeleton composed of the polymer P.

In Example 1, the porous sheet had a thickness of 215 $\mu$m, had a weight per unit area of 13.03 mg/cm$^2$, and had a porosity of 45% calculated from the true density of the polymer P, etc. The density of the amino group in the polymer P calculated from the monomer blending ratio was 13.87 mmol/g. The amount of substance of the amino group per unit volume of the porous sheet was 8.39 mmol/cm$^3$.

(Example 2)

First, a mixed solution of an epoxy monomer, an amine monomer, and a porogen was prepared by the same method as in Example 1, except that the blending amounts of these materials were changed as shown in Table 1. Next, a tabletop shaker (Angel Vibrator Digital 60 Hz) was set to intensity 5, and the mixed solution was shaken for 2 minutes. Then, the mixed solution was applied onto 250-pm-thick glass paper (PHN-50GC, manufactured by Oji F-Tex Co., Ltd.) using an applicator having a gap of 500 $\mu$m. At this time, the mixed solution permeated the interior of the glass paper. The mixed solution was cured by allowing the glass paper, into which the mixed solution had permeated, to stand in a dryer at 120°C for 30 minutes. Accordingly, a sheet-shaped cured body including a polymer P having an amino group and the glass paper as a filler was obtained. An operation of immersing the cured body in ethyl acetate at 60°C for 30 minutes was repeated twice with liquid replacement. Accordingly, the porogen was removed from the cured body to form a porous sheet. Next, the porous sheet was dried in a dryer at 60°C for 30 minutes to obtain an acidic gas adsorbent (self-supporting film of the porous sheet) of Example 2 including the glass paper as a filler. In Example 2, the porous sheet had a three-dimensional network skeleton composed of the polymer P.

In Example 2, the weight per unit area of the acidic gas adsorbent (porous sheet) was 15.8 mg/cm$^2$. A value (10.8 mg/cm$^2$) obtained by subtracting the weight per unit area (5.0 mg/cm$^2$) of the glass paper from the weight per unit area (15.8 mg/cm$^2$) of the acidic gas adsorbent can be regarded as the weight per unit area of the three-dimensional network skeleton composed of the polymer P. The theoretical thickness of the three-dimensional network skeleton calculated from the true density (1.1 g/cm$^3$) of the polymer P and the porosity (45%) of the three-dimensional network skeleton was 179 $\mu$m. The density of the amino group in the polymer P calculated from the monomer blending ratio was 12.38 mmol/g. The amount of substance of the amino group per unit volume of the three-dimensional network skeleton included in the porous sheet was 7.49 mmol/cm$^3$. Furthermore, the amount of substance of the amino group per unit volume of the porous sheet was 5.27 mmol/cm$^3$.

(Examples 3 to 6)

Acidic gas adsorbents (self-supporting films of porous sheets) of Examples 3 to 6 were obtained by the same method as in Example 2, except that a fiber structure shown in Table 1 was used instead of the glass paper. In each of Examples 3 to 6, the porous sheet had a three-dimensional network skeleton composed of the polymer P.

(Comparative Example 1)

First, 3.00 g of porous silica (SUNSPERA H-52, manufactured by AGC Si-Tech Co., Ltd.) having a pore volume of 1.5 mL/g, a specific surface area of 700 $m^2/g$, a pore diameter of 10 nm, and a true density of 2.2 g/mL was prepared as a porous body and immersed in 60 g of methanol (manufactured by FUJIFILM Wako Pure Chemical Corporation, special grade) overnight to prepare a dispersion liquid. Next, 0.447 g of triethylenetetramine (TETA, manufactured by Sigma-Aldrich Co. LLC.) was prepared as an amine monomer, and 0.174 g of ethylene glycol diglycidyl ether (EX-810, manufactured by Nagase ChemteX Corporation) and 0.261 g of pentaerythritol tetraglycidyl ether (SHOFREE (registered trademark) PETG, manufactured by Showa Denko K.K.) were prepared as an epoxy monomer. The ratio (E/A) of an equivalent (E) of the epoxy group included in the epoxy monomer relative to an equivalent (A) of active hydrogen of the primary amino group included in the amine monomer was 0.4.

Next, these monomers were added to the above dispersion liquid. Accordingly, a compound group (TETA, EX-810, and PETG) entered the interiors of the pores of the porous body and came into contact with the surfaces of the pores of the porous body. Next, using a rotatory evaporator, the dispersion liquid was heated at a temperature of 60°C in a reduced-pressure atmosphere. Accordingly, a reaction of the compound group proceeded, and the solvent included in the dispersion liquid was distilled off. Next, a drying process of the porous body was performed by heating the porous body at a temperature of 80°C in a vacuum atmosphere. Accordingly, an acidic gas adsorbent of Comparative Example 1 having a polymer P supported on the porous body was obtained. In the acidic gas adsorbent of Comparative Example 1, the three-dimensional network skeleton described above for the Examples was not present.

(Comparative Examples 2 to 6)

Acidic gas adsorbents of Comparative Examples 2 to 6 were obtained by the same method as in Comparative Example 1, except that the blending amounts of the epoxy monomer and the amine monomer were changed as shown in Table 1. In the acidic gas adsorbents of Comparative Examples 2 to 6, the three-dimensional network skeleton described above for the Examples was not present.

[Observation of cross-section of porous sheet]

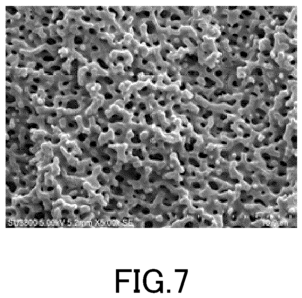

A cross-section of the porous sheet produced in Example 1 was observed using a scanning electron microscope (SEM). An obtained SEM image is shown in FIG. 7. As can be seen from FIG. 7, the porous sheet had a three-dimensional network skeleton composed of the polymer P.

[BET specific surface area]

With respect to the acidic gas adsorbents produced in Examples 1 and 2 and Comparative Examples 1 to 6, the BET specific surface area in terms of nitrogen gas adsorption was measured. The BET specific surface area was measured using a specific surface area measurement device (trade name "BELSORP-mini", manufactured by MicrotracBEL Corporation) by a method conforming to the standards of JIS Z8830: 2013.

[Glass transition temperature Tg]

With respect to the polymer P included in each of the acidic gas adsorbents produced in the Examples and the Comparative Examples, the glass transition temperature Tg was measured by the following method. First, a polymer having the same composition as the polymer P included in each acidic gas adsorbent was synthesized. About 5 mg of this polymer was set in a differential scanning calorimeter (DSC 2500, manufactured by TA Instruments). Using this device, the temperature was increased from 30°C to 200°C at a temperature increase rate of 10°C/min in a nitrogen atmosphere and maintained at that temperature for 1 minute. Next, the polymer was cooled to -50°C at a temperature decrease rate of 10°C/min and maintained at that temperature for 1 minute, and then the temperature was increased to 200°C at a temperature increase rate of 10°C/min. In a DSC curve at the second temperature increase, a first baseline before specific heat change appeared, a second baseline after specific heat change appeared, and a tangent line passing through a point at which the slope became maximum among bent portions due to the specific heat change, are identified. The intermediate temperature between the intersection of the first baseline and the tangent line and the intersection of the second baseline and the tangent line was identified as the glass transition temperature Tg.

[True density]

With respect to the polymer P included in each of the acidic gas adsorbents produced in the Examples and the Comparative Examples, the true density was identified by the following method. First, a mixed solution including the epoxy monomer and the amine monomer in the same blending amounts as in each mixed solution used in the Examples and the Comparative Examples was prepared. Next, a tabletop shaker (Angel Vibrator Digital 60 Hz) was set to intensity 5, and the mixed solution was shaken for 2 minutes. The mixed solution was poured into a PFA petri dish having an inner diameter of 75 mm and allowed to stand in a dryer at 120°C for 30 minutes to cure the mixed solution. Accordingly, a cured body including the polymer P having an amino group was obtained. An operation of immersing the cured body in ethyl acetate at 60°C for 30 minutes was repeated twice with liquid replacement to remove the monomers remaining in the cured body. Next, the cured body was dried in a dryer at 60°C for 30 minutes to obtain a cured body composed of the polymer P. The density of the cured body was measured using an electronic densimeter (EW-300SG, manufactured by Alfa Mirage Co., Ltd.) by a method conforming to JIS K7112: 1999 (Methods of determining the density and relative density of non-cellular plastics), and the obtained measurement value was regarded as the true density of the polymer P.

[Amount of substance of amino group per unit volume]

With respect to the acidic gas adsorbents of Comparative Examples 1 to 6, the amount of substance of the amino group per unit volume was identified by the following method. First, each acidic gas adsorbent was set in a simultaneous thermal analysis DSC/TGA device (DSC6500, manufactured by TA Instruments). Using this device, the temperature was increased from 30°C to 100°C at a temperature increase rate of 10°C/min in a nitrogen atmosphere and maintained at that temperature for 40 minutes (operation 1). Accordingly, the water included in the acidic gas adsorbent was removed. Next, the temperature was increased from 100°C to 800°C at a temperature increase rate of 10°C/min and maintained at that temperature for 5 minutes (operation 2). Accordingly, the polymer P was removed from the acidic gas adsorbent.

Next, the ratio of the weight (g) of the acidic gas adsorbent after the above operation 1 relative to the weight (g) of the acidic gas adsorbent before setting in the device (weight maintenance rate W1 (%)) and the ratio of the weight (g) of the acidic gas adsorbent after the above operation 2 relative to the weight (g) of the acidic gas adsorbent before setting in the device (weight maintenance rate W2 (%)) were identified. A ratio F of the weight (g) of the polymer P relative to the weight (g) of the acidic gas adsorbent was calculated by the following formula, using the weight maintenance rates W1 and W2.

$$\text{Ratio F} = 1 - (1/W1) \times W2$$

Next, a volume A (mL) of the porous body per 1 g, a weight B (g) of the polymer P relative to 1 g of the porous body, a density C (g/mL) of composite particles composed of the porous body and the polymer P, and a density D of the amino group in the composite particles were calculated by the following formulae, respectively.

Volume A (mL) = pore volume (mL) of porous body per 1 g + weight (g) of porous body/true density (g/mL) of porous body

$$\text{Weight B (g)} = \text{ratio F}/(1 - \text{ratio F}) \times \text{weight (g) of porous body}$$

Density C (g/mL) of composite particles = (weight (g) of porous body + weight B (g))/volume A (mL) Density D (mmol/g) of amino group = ratio F $\times$ density (mmol/g) of amino group in polymer P

Furthermore, an amount of substance E of the amino group per unit volume of the acidic gas adsorbent was calculated by the following formula. In the following formula, a value (0.74) obtained on the assumption that the composite particles were packed most tightly in the acidic gas adsorbent was used as the filling rate of the composite particles.

Amount of substance E (mmol/cm$^3$) = density C (g/mL) of composite particles $\times$ filling rate of composite particles $\times$ density D (mmol/g) of amino group in composite particles

[Table 1]

| | Epoxy compound E1 | | Epoxy compound E2 | | Weight ratio E1/E2 (*1) | Amine compound | |
|---|---|---|---|---|---|---|---|
| | Type | Blending amount [g] | Type | Blending amount [g] | | Type | Blending amount [g] |
| Example 1 | EX-810 | 2.55 | PETG | 3.83 | 4/6 | TETA | 6.57 |
| Example 2 | EX-810 | 2.55 | PETG | 3.83 | 4/6 | TETA | 5.25 |
| Example 3 | EX-810 | 2.55 | PETG | 3.83 | 4/6 | TETA | 5.25 |
| Example 4 | EX-810 | 2.55 | PETG | 3.83 | 4/6 | TETA | 5.25 |
| Example 5 | EX-810 | 2.55 | PETG | 3.83 | 4/6 | TETA | 5.25 |
| Example 6 | EX-810 | 2.55 | PETG | 3.83 | 4/6 | TETA | 5.25 |
| Comparative Example 1 | EX-810 | 0.174 | PETG | 0.261 | 4/6 | TETA | 0.447 |
| Comparative Example 2 | EX-810 | 0.435 | PETG | 0.652 | 4/6 | TETA | 1.118 |
| Comparative Example 3 | EX-810 | 0.696 | PETG | 1.043 | 4/6 | TETA | 1.789 |
| Comparative Example 4 | EX-810 | 0.194 | PETG | 0.290 | 4/6 | TETA | 0.398 |
| Comparative Example 5 | EX-810 | 0.387 | PETG | 0.581 | 4/6 | TETA | 0.796 |
| Comparative Example 6 | EX-810 | 0.581 | PETG | 0.871 | 4/6 | TETA | 1.195 |
| (*1) The weight ratio E1/E2 of the epoxy compound E1 relative to the epoxy compound E2 | | | | | | | |

[Table 1] (cont.)

| | Equivalent ratio E/A (*2) | Porogen p1 | | Porogen p2 | | Filler |
|---|---|---|---|---|---|---|
| | | Type | Blending amount [g] | Type | Blending amount [g] | |
| Example 1 | 0.4 | PB-500 | 5.22 | DGP-700 | 5.22 | - |
| Example 2 | 0.5 | PB-500 | 4.63 | DGP-700 | 4.63 | PHN-50GC |
| Example 3 | 0.5 | PB-500 | 4.63 | DGP-700 | 4.63 | MP-22 |
| Example 4 | 0.5 | PB-500 | 4.63 | DGP-700 | 4.63 | PY120-01 |
| Example 5 | 0.5 | PB-500 | 4.63 | DGP-700 | 4.63 | PY120-32 |
| Example 6 | 0.5 | PB-500 | 4.63 | DGP-700 | 4.63 | 120H-PB |
| Comparative Example 1 | 0.4 | - | - | - | - | - |
| Comparative Example 2 | 0.4 | - | - | - | - | - |
| Comparative Example 3 | 0.4 | - | - | - | - | - |
| Comparative Example 4 | 0.5 | - | - | - | - | - |
| Comparative Example 5 | 0.5 | - | - | - | - | - |
| Comparative Example 6 | 0.5 | - | - | - | - | - |
| (*2) The ratio E/A of the equivalent (E) of the epoxy group in the epoxy compound relative to the equivalent (A) of active hydrogen of the primary amino group in the amine compound | | | | | | |

[Table 2]

| | Polymer P | | Acidic gas adsorbent | | | |
|---|---|---|---|---|---|---|
| | Glass transition temperature Tg [°C] | True density [g/cm³] | BET specific surface area [m²/g] | Ratio F (*1) | Density C [g/mL] (*2) | Amount of substance of amino group [mmol/cm³] (*3) |
| Example 1 | 13.4 | 1.1 | 2.9 | - | - | 8.39 |
| Example 2 | 22.0 | 1.1 | 4.8 | - | - | 5.27 (7.49 (*4)) |
| Example 3 | 22.0 | 1.1 | - | - | - | 4.48 (7.49 (*4)) |
| Example 4 | 22.0 | 1.1 | - | - | - | 4.51 (7.49 (*4)) |
| Example 5 | 22.0 | 1.1 | - | - | - | 4.55 (7.49 (*4)) |
| Example 6 | 22.0 | 1.1 | - | - | - | 4.30 (7.49 (*4)) |
| Comparative Example 1 | 13.4 | 1.1 | 223.4 | 0.22 | 0.66 | 1.47 |
| Comparative Example 2 | 13.4 | 1.1 | 72.5 | 0.41 | 0.86 | 3.55 |
| Comparative Example 3 | 13.4 | 1.1 | 33.6 | 0.50 | 1.02 | 5.20 |
| Comparative Example 4 | 22.0 | 1.1 | 229.3 | 0.23 | 0.66 | 1.39 |
| Comparative Example 5 | 22.0 | 1.1 | 121.4 | 0.37 | 0.80 | 2.63 |
| Comparative Example 6 | 22.0 | 1.1 | 62.9 | 0.47 | 0.96 | 4.10 |

(*1) The ratio F of the weight of the polymer P relative to the weight of the acidic gas adsorbent
(*2) The density C of the composite particles composed of the porous body and the polymer P
(*3) The amount of substance of the amino group per unit volume of the acidic gas adsorbent
(*4) The amount of substance of the amino group per unit volume of the three-dimensional network skeleton included in the porous sheet

The abbreviations in Table 1 are as follows.

EX-810: ethylene glycol diglycidyl ether (EX-810, manufactured by Nagase ChemteX Corporation)
PETG: pentaerythritol tetraglycidyl ether (SHOFREE (registered trademark) PETG, manufactured by Showa Denko K.K.)
TETA: triethylenetetramine (manufactured by Tosoh Corporation)
PB-500: poly(1,2-butanediol)-6 propylene glycol (UNIOL (registered trademark) PB-500, manufactured by NOF CORPORATION)
DGP-700: polyoxypropylene glyceryl ether (UNILUB (registered trademark) DGP-700, manufactured by NOF CORPORATION)
PHN-50GC: glass paper (pulp-containing nonwoven fabric) (PHN-50GC, manufactured by Oji F-Tex Co., Ltd.)
MP-22: pulp-containing nonwoven fabric (MP-22, manufactured by NIPPON PAPER PAPYLIA CO., LTD.)
PY120-01: synthetic fiber-based nonwoven fabric (PY120-01, manufactured by AWA PAPER & TECHNOLOGICAL COMPANY, Inc.)
PY120-32: synthetic fiber-based nonwoven fabric (PY120-32, manufactured by AWA PAPER & TECHNOLOGICAL COMPANY, Inc.)
120H-PB: pulp-containing nonwoven fabric (120H-PB base paper, manufactured by NIPPON PAPER PAPYLIA CO., LTD.)

[Adsorption amount of carbon dioxide]

With respect to the acidic gas adsorbents of Example 1 and Comparative Examples 1 to 3, the adsorption amount of carbon dioxide was measured by the above-described method. At this time, in Example 1, the acidic gas adsorbent cut such that the area of a main surface thereof was 4.72 cm² was used as a measurement sample. In each of Comparative Examples 1 to 3, a measurement sample whose weight was adjusted such that the volume thereof was substantially equal to that of the measurement sample used in Example 1 was used. The weights of the measurement samples of Comparative Examples 1 to 3 were 49 mg, 64 mg, and 76 mg, respectively. With respect to Comparative Examples 1 to 3, the weight of the measurement sample whose volume was substantially equal to that of the measurement sample used in Example 1 was calculated by the following formula, using the density C (g/mL) of the composite particles composed of the porous body and the polymer P and the filling rate of the composite particles. In the following formula, a value (0.74) obtained on the assumption that the composite particles were packed most tightly in the acidic gas adsorbent was used as the filling rate of the composite particles.

Weight (mg) of measurement sample of Comparative Example = volume ($cm^3$) of measurement sample of Example 1 $\times$ density C (g/mL) $\times$ filling rate of composite particles

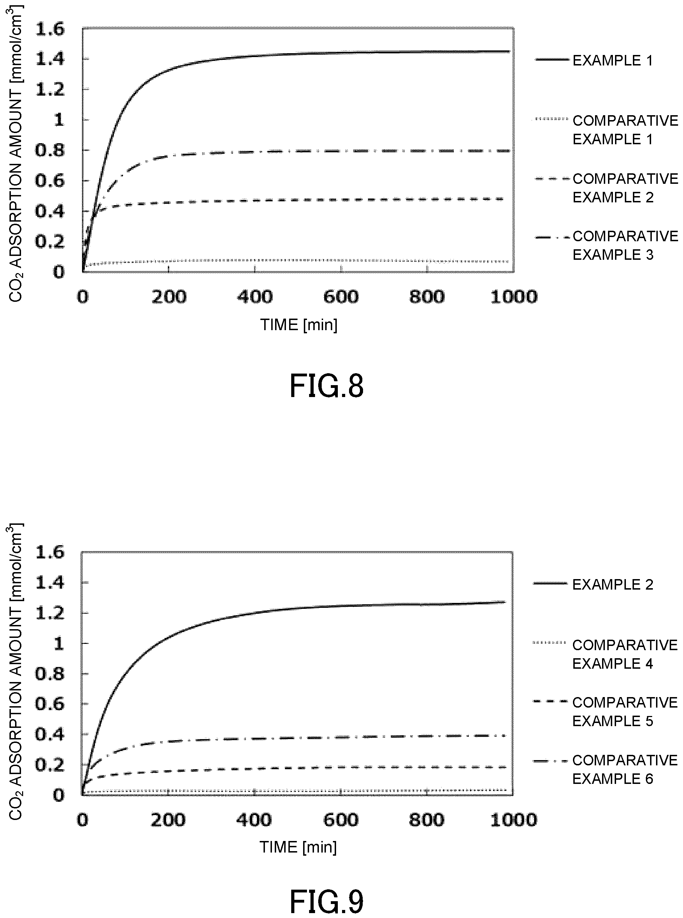

The measurement results of the adsorption amount of carbon dioxide for Example 1 and Comparative Examples 1 to 3 are shown in FIG. 8. FIG. 8 is a graph showing the relationship between the time from the start of the adsorption test and the adsorption amount of carbon dioxide by the acidic gas adsorbent. From FIG. 8, it was confirmed that the adsorption amount of carbon dioxide became saturated and stabilized at a predetermined time. As can be seen from FIG. 8, the acidic gas adsorbent of Example 1 had a larger adsorption amount of carbon dioxide per unit volume than the acidic gas adsorbents of Comparative Examples 1 to 3 and was suitable for adsorption of acidic gas. The adsorption amount a of carbon dioxide when the acidic gas adsorbent of Example 1 was caused to be in contact with the above-described mixed gas G for 15 hours was 1.45 mmol/$cm^3$.

Furthermore, with respect to the acidic gas adsorbents of Example 2 and Comparative Examples 4 to 6, the adsorption amount of carbon dioxide was measured by the above-described method. At this time, in Example 2, the acidic gas adsorbent cut such that the area of a main surface thereof was 5.76 $cm^2$ was used as a measurement sample. In each of Comparative Examples 4 to 6, a measurement sample whose weight was adjusted such that the volume thereof was substantially equal to that of the measurement sample used in Example 2 was used. The weights of the measurement samples of Comparative Examples 4 to 6 were 50 mg, 60 mg, and 72 mg, respectively. With respect to Comparative Examples 4 to 6, the weight of the measurement sample whose volume was substantially equal to that of the measurement sample used in Example 2 was calculated by the same method as described above for Comparative Examples 1 to 3.

The measurement results of the adsorption amount of carbon dioxide for Example 2 and Comparative Examples 4 to 6 are shown in FIG. 9. FIG. 9 is a graph showing the relationship between the time from the start of the adsorption test and the adsorption amount of carbon dioxide by the acidic gas adsorbent. From FIG. 9, it was confirmed that the adsorption amount of carbon dioxide became saturated and stabilized at a predetermined time. As can be seen from FIG. 9, the acidic gas adsorbent of Example 2 had a larger adsorption amount of carbon dioxide per unit volume than the acidic gas adsorbents of Comparative Examples 4 to 6 and was suitable for adsorption of acidic gas. The adsorption amount a of carbon dioxide when the acidic gas adsorbent of Example 2 was caused to be in contact with the above-described mixed gas G for 15 hours was 1.27 mmol/$cm^3$.

From the above results, it can be found that the acidic gas adsorbents of Examples 1 and 2 including the porous sheet having the three-dimensional network skeleton including the polymer P have a larger adsorption amount of carbon dioxide than the acidic gas adsorbents of the Comparative Examples and are suitable for adsorption of acidic gas. The acidic gas adsorbents of the other Examples 3 to 6 have the same configuration as that of Example 2, except for the type of the fiber structure used as a filler. Therefore, it is inferred that the acidic gas adsorbents of Examples 3 to 6 have substantially the same adsorption performance for acidic gas such as carbon dioxide as that of Example 2.

The acidic gas adsorbents of the Examples have a relatively large amount of substance of the amino group per unit volume, and therefore is suitable for adjusting the thickness of the porous sheet to be small while maintaining acidic gas adsorption ability. With the porous sheet having a small thickness, for example, the cross-sectional area of the air flow path of a structure, in particular, a honeycomb structure, produced using the acidic gas adsorbent can be adjusted to be large. The structure having an air flow path with a large cross-sectional area is suitable for reducing the pressure loss that occurs, for example, when in contact with acidic gas. Thus, the acidic gas adsorbents of the Examples can be said to be suitable for reducing the pressure loss that occurs in a structure including the acidic gas adsorbent.

(Calculation Example 1)

Next, it was assumed that an acidic gas adsorbent was produced using a sheet-shaped structure formed by aggregation of porous particles of alumina. Specifically, it was assumed that an acidic gas adsorbent was produced by filling the pores of the porous particles in the sheet-shaped structure with the polymer P produced in Example 1. The amount of substance of the amino group per unit volume of the acidic gas adsorbent was calculated by the following method. In the following calculations, additives such as a binding agent normally required for conventional acidic gas adsorbents are not taken into consideration.

First, the porous particles were assumed to have a pore volume of 1.25 mL/g, a specific surface area of 175 $m^2$/g, a pore diameter of 20 nm, and a true density of 3.8 g/mL. The ratio F of the weight of the polymer P relative to the weight of the acidic gas adsorbent (weight (g) of polymer P/(weight (g) of polymer P + weight (g) of porous particles)) was assumed to be 0.39.

The volume A of the porous particles per 1 g was calculated to be 1.51 mL by the following formula.

$$\text{Volume A (mL)} = \text{pore volume (mL) of porous particles per 1 g} + \text{weight (g) of porous particles/true density (g/mL) of porous particles}$$
$$= 1.25 + 1/3.8 = 1.51 \text{ (mL)}$$

The weight B of the polymer P relative to 1 g of the porous particles in the acidic gas adsorbent was calculated to be 0.639 g by the following formula.

$$\text{Weight B (g)} = \text{weight ratio F of polymer P/(1 - weight ratio F of polymer P)} \times \text{weight (g) of porous particles}$$
$$= 0.39/(1 - 0.39) \times 1 = 0.639 \text{ (g)}$$

The density C of the composite particles composed of the porous particles and the polymer P was calculated to be 1.08 g/mL by the following formula.

$$\text{Density C (g/mL) of composite particles} = \text{(weight (g) of porous particles + weight B (g) of polymer P)/volume A (mL) of porous particles per 1 g}$$
$$= (1 + 0.639)/1.51 = 1.08 \text{ (g/mL)}$$

The density D of the amino group in the above-described composite particles was calculated to be 5.4 mmol/g by the following formula.

$$\text{Density D (mmol/g) of amino group} = \text{ratio F of weight of polymer P} \times \text{density (mmol/g) of amino group in polymer P}$$
$$= 0.39 \times 13.87 = 5.4 \text{ (mmol/g)}$$

In Calculation Example 1, the amount of substance E of the amino group per unit volume of the acidic gas adsorbent was calculated to be 4.34 mmol/cm$^3$ by the following formula. In the following formula, a value (0.74) obtained on the assumption that the composite particles were packed most tightly in the acidic gas adsorbent was used as the filling rate of the composite particles.

$$\text{Amount of substance E (mmol/cm}^3\text{) of amino group} = \text{density C (g/mL) of composite particles} \times \text{filling rate of composite particles} \times \text{density D (mmol/g) of amino group in composite particles}$$
$$= 1.08 \times 0.74 \times 5.4 = 4.34 \text{ (mmol/cm}^3\text{)}$$

From the amount of substance E of the amino group, the amount of carbon dioxide that can be absorbed by the acidic gas adsorbent of Calculation Example 1 was calculated to be up to 0.75 mmol/cm$^3$. From this result, it can be found that the acidic gas adsorbents of Examples 1 and 2 have higher adsorption performance for acidic gas such as carbon dioxide than the acidic gas adsorbent of Calculation Example 1.

[Tensile strength of fiber structure]

With respect to the fiber structures used in Examples 2 to 6, the tensile strengths $S_{TD}$ and $S_{MD}$ were measured by the above-described method. An autograph apparatus (AGS-50NX, manufactured by SHIMADZU CORPORATION) was used as a tensile tester. Table 3 shows the test force when each test piece was elongated by 3%, together with tensile strengths $S_{TD}$ and $S_{MD}$.

[Dimensional change rate]

With respect to the porous sheets produced in Examples 2 to 6, the dimensional change rates $R_{TD}$ and $R_{MD}$ were measured by the above-described method.

[Table 3]

| | Fiber structure | | | | | | | Porous sheet | |
| | Product number | Thickness [$\mu$m] | Weight per unit area [g/m$^2$] | Test force [N/10 mm] | | Tensile strength [MPa] | | Dimensional change rate [%] | |
| | | | | MD | TD | $S_{MD}$ | $S_{TD}$ | $R_{MD}$ | $R_{TD}$ |
| Example 2 | PHN-50GC | 250 | 50 | 21.3 | 18.9 | 8.5 | 7.5 | 1.1 | 0.5 |
| Example 3 | MP-22 | 147 | 50 | 17.8 | 12.7 | 12.1 | 8.7 | 0.7 | 1.2 |
| Example 4 | PY120-01 | 130 | 62 | 16.8 | 5.8 | 13.0 | 4.5 | 0.6 | 0.2 |
| Example 5 | PY120-32 | 160 | 78 | 18.4 | 10.6 | 11.5 | 6.6 | 0.6 | 0.3 |
| Example 6 | 120H-PB | 280 | 85 | 26.3 | 5.0 | 9.4 | 1.8 | 1.4 | 4.7 |

As can be seen from Table 3, the higher the tensile strength of the fiber structure as a filler was, the lower the dimensional change rate of the porous sheet tended to be. In particular, in Examples 2 to 5 in which the tensile strength $S_{TD}$ of the fiber structure was 2 MPa or more, the dimensional change rate $R_{TD}$ of the porous sheet was a sufficiently low value. From the above results, it is inferred that the porous sheets of Examples 2 to 6, in particular, Examples 2 to 5, are less likely to fall off from a support, an acidic gas recovery device, or the like during use thereof or the like. Furthermore, it is also inferred that these porous sheets are less likely to be deformed during use thereof or the like and are less likely to cause obstruction to the passage of gas caused by deformation.

INDUSTRIAL APPLICABILITY

The acidic gas adsorbent of the present embodiment can adsorb carbon dioxide in atmospheric air, for example.

**Claims**

1. An acidic gas adsorbent comprising a porous sheet including a polymer, wherein

   the polymer has an amino group, and
   the porous sheet has a three-dimensional network skeleton composed of the polymer.

2. The acidic gas adsorbent according to claim 1, wherein the porous sheet includes continuous holes continuously formed in a three-dimensional manner.

3. The acidic gas adsorbent according to claim 1, wherein the porous sheet includes the polymer as a main component.

4. The acidic gas adsorbent according to claim 1, wherein the amino group includes a secondary amino group.

5. The acidic gas adsorbent according to claim 1, wherein the polymer is an epoxy polymer including a constitutional unit derived from an amine monomer.

6. The acidic gas adsorbent according to claim 1, wherein the polymer has a glass transition temperature of 40°C or less.

7. The acidic gas adsorbent according to claim 1, wherein the porous sheet has a specific surface area of 1.0 m$^2$/g or

more.

8. The acidic gas adsorbent according to claim 1, wherein the porous sheet has a porosity of 20% or more.

9. The acidic gas adsorbent according to claim 1, further comprising a support supporting the porous sheet.

10. The acidic gas adsorbent according to claim 1, wherein an adsorption amount of carbon dioxide when the acidic gas adsorbent is caused to be in contact with mixed gas composed of carbon dioxide, nitrogen, and water vapor for 15 hours is 0.1 mmol/cm$^3$ or more,
where the carbon dioxide in the mixed gas has a concentration of 400 vol ppm and the mixed gas has a temperature of 20°C and a humidity of 50%RH.

11. The acidic gas adsorbent according to claim 1, having a flat plate shape or a corrugated shape.

12. A structure comprising:

   the acidic gas adsorbent according to any one of claims 1 to 11; and
   an air flow path.

13. An acidic gas adsorption device comprising

   an adsorption part having a gas inlet and a gas outlet, wherein
   the adsorption part contains the acidic gas adsorbent according to any one of claims 1 to 11.

14. An acidic gas recovery device comprising:

   the acidic gas adsorbent according to any one of claims 1 to 11; and
   a medium path, wherein
   a heat medium which heats the acidic gas adsorbent passes through the medium path during desorption operation in which acidic gas adsorbed by the acidic gas adsorbent is desorbed from the acidic gas adsorbent.

15. The acidic gas recovery device according to claim 14, wherein the medium path penetrates the acidic gas adsorbent in a thickness direction of the acidic gas adsorbent.

16. The acidic gas recovery device according to claim 14, wherein

   the acidic gas recovery device comprises the two acidic gas adsorbents, and
   the medium path is formed between the two acidic gas adsorbents.

17. The acidic gas recovery device according to claim 14, wherein a cooling medium which cools the acidic gas adsorbent passes through the medium path after the desorption operation.

18. A production method for an acidic gas adsorbent including a porous sheet, the production method comprising:

   a step (I) of curing a mixed solution including a porogen and a compound group including an amine monomer, to obtain a cured body; and
   a step (II) of removing the porogen from the cured body having a sheet shape, to obtain the porous sheet.

19. The production method according to claim 18, wherein, in the step (I), the mixed solution is applied onto a support and an obtained coating film is cured to obtain the cured body having a sheet shape.

20. A sheet-shaped structure comprising:

   a porous sheet including a polymer; and
   a support supporting the porous sheet, wherein
   the polymer has an amino group, and
   the porous sheet has a three-dimensional network skeleton composed of the polymer.

FIG.1

FIG.2A

FIG.2B

FIG.3

FIG.4

FIG.5A

FIG.5B

FIG.5C

300

60

14

10

61

# FIG.6A

310

10

70

14

71a

71b

60

73 (73b)    65    72    73 (73a)

# FIG.6B

FIG.7

FIG.8

FIG.9

## INTERNATIONAL SEARCH REPORT

| International application No. |
| --- |
| **PCT/JP2022/035486** |

**A.    CLASSIFICATION OF SUBJECT MATTER**

*B32B 5/18*(2006.01)i; *B32B 27/00*(2006.01)i; *B01D 53/04*(2006.01)i; *C01B 32/50*(2017.01)i; *B01J 20/26*(2006.01)i; *B01J 20/28*(2006.01)i; *B01J 20/30*(2006.01)i

FI:    B01J20/26 A; B01J20/28 Z; B01J20/30; B01D53/04 110; B32B5/18; B32B27/00 B; C01B32/50

According to International Patent Classification (IPC) or to both national classification and IPC

**B.    FIELDS SEARCHED**

Minimum documentation searched (classification system followed by classification symbols)

B32B5/18; B32B27/00; B01D53/04; C01B32/50; B01J20/26; B01J20/28; B01J20/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2017-225944 A (TOSOH CORP) 28 December 2017 (2017-12-28) paragraphs [0031]-[0094] | 1-5, 7-9, 11-13, 18-20 |
| Y | paragraphs [0031]-[0094] | 14-17 |
| A | paragraphs [0031]-[0094] | 6, 10 |
| Y | JP 2014-530093 A (CORNING INCORPORATED) 17 November 2014 (2014-11-17) paragraphs [0021], [0022] | 14-17 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 October 2022** | **08 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/035486** |

| Patent document cited in search report | Publication date (day/month/year) | Patent family member(s) | Publication date (day/month/year) |
|---|---|---|---|
| JP 2017-225944 A | 28 December 2017 | (Family: none) | |
| JP 2014-530093 A | 17 November 2014 | WO 2013/039736 A1 paragraphs [0027], [0028] US 2013/0068101 A1 CN 103826742 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014533195 A